(19) Europäisches Patentamt
European Patent Office
Office européen des brevets

(11) Publication number: **0 082 582**
**A1**

(12) # EUROPEAN PATENT APPLICATION

(21) Application number: 82300977.4

(22) Date of filing: 25.02.82

(51) Int. Cl.³: C 08 K 5/00
C 08 L 101/04, C 08 L 27/06

(30) Priority: 26.02.81 US 238396
04.02.82 US 345828

(43) Date of publication of application:
29.06.83 Bulletin 83/26

(84) Designated Contracting States:
AT BE CH DE FR GB IT LI NL SE

(71) Applicant: CARSTAB CORPORATION
West Street
Reading Ohio 45215(US)

(72) Inventor: Kugele, Thomas G.
6026 Colter Avenue
Cincinnati Ohio 45230(US)

(72) Inventor: Mesch, Keith A.
2147 Broadhurst Avenue
Cincinnati Ohio 45240(US)

(72) Inventor: Wursthorn, Karl R.
1928 Creswell Drive
Cincinnati Ohio 45240(US)

(74) Representative: Hose, Cyril Gustav Bidwell et al,
Baron & Warren 18 South End Kensington
London W8 5BU(GB)

(54) **Polymer stabilising compositions, polymers stabilised therewith, a process for stabilising polymers and shaped articles formed from such stabilised polymers.**

(57) Compositions which are effective in stabilizing polymers against the deteriorative effects of heat are provided comprising 1) a hydroxythio tin compound or mixture of hydroxythio tin compounds, 2) a mercaptan-containing organic compound or mixture of mercaptan-containing organic compounds, and, optionally, 3) an organotin compound or mixture of organotin compounds. Also provided are polymer compositions containing said stabilizers, a process for stabilizing polymers, and articles of manufacture made from stabilized polymer compositions.

EP 0 082 582 A1

0082582



"POLYMER STABILISING COMPOSITIONS, POLYMERS STABILISED THEREWITH, A PROCESS FOR STABILISING POLYMERS AND SHAPED ARTICLES FORMED FROM SUCH STABILISED POLYMERS"

This invention relates to stabilizer compositions containing 1) a hydroxythio tin compound, or mixture of hydroxythio tin compounds, 2) a mercaptan-containing organic compound or mixture of mercaptan-containing organic compounds, and, optionally, 3) an organotin compound or mixture of organotin compounds. This invention also relates to polymer compositions containing said stabilizer compositions, to methods for stabilizing polymers by adding thereto said stabilizer compositions, and to articles of manufacture, e.g. pipe, made from said stabilized polymer compositions.

Organotin compounds, particularly useful as stabilizers for halogen containing polymers, are well known in the art. These organotin compounds can provide stabilization of such polymers when used alone or in combination with various compounds. For example, U. S. Patent No. 3,503,924 to M. W. Pollock discloses stabilizers for polyvinyl chloride resins which are mixtures containing a diorganotin mercaptide and a minor amount of an alpha-mercapto acid. Pollock also discloses, in U. S. Patent No. 3,507,827, stabilizer combinations for decreasing early discoloration of polyvinyl chloride resins which contain (1) a dialkyl, dicycloalkyl or alkylcycloalkyl tin mercapto carboxylic acid ester, and (2) an alpha- or beta-mercapto acid having at least three carbon atoms, or.

an alpha- or beta-mercapto alcohol having at least two carbon atoms.

In accordance with this invention there are provided compositions for stabilizing halogen-containing organic polymers which comprise 1) a hydroxythio tin compound or mixture of hydroxythio tin compounds, 2) a mercaptan-containing organic compound or mixture of mercaptan-containing organic compounds, and, optionally, 3) an organotin compound or mixture of organotin compounds. The invention is also directed to polymer compositions containing a stabilizing composition comprising 1) a hydroxythio tin compound or mixture of hydroxythio tin compounds, 2) a mercaptan-containing organic compound or mixture of mercaptan-containing organic compounds, and, optionally, 3) an organotin compound or mixture of organotin compounds, to a process for stabilizing polymers comprising adding thereto a stabilizing composition comprising 1) a hydroxythio tin compound or mixture of hydroxythio tin compounds, 2) a mercaptan-containing organic compound or mixture of mercaptan-containing organic compounds, and, optionally, 3) an organotin compound or mixture of organotin compounds, and to articles of manufacture, e.g. pipe, made from polymers containing a stabilizing composition comprising 1) a hydroxythio tin compound or mixture of hydroxythio tin compounds, 2) a mercaptan-containing organic compound or mixture of mercaptan-containing organic compounds, and, optionally, 3) an organotin compound or mixture of organotin compounds.

The stabilizer compositions of this invention have quite unexpectedly been found to impart stabilization against the deteriorative effects of heat to halogen-containing organic polymers which is superior to those stabilizer compositions previously known in the art.

The term halogen-containing organic polymers as used

herein refers to halogen-containing vinyl and vinylidene polymers or resins in which the halogen is attached directly to the carbon atoms. Preferably, the polymer is a vinyl halide polymer, more particularly a vinyl chloride polymer. Usually, the vinyl chloride polymer is made from monomers consisting of vinyl chloride alone or a mixture of monomers comprising, preferably, at least about 70% by weight based on the total monomer weight of vinyl chloride.

The halogen-containing polymers which can be stabilized according to this invention include chlorinated polyethylene having 14 to 75%, e.g. 27%, chloride by weight, chlorinated natural and synthetic rubber, rubber hydrochloride, chlorinated polystyrene, chlorinated polyvinyl chloride, polyvinyl bromide, polyvinyl fluoride, copolymers of vinyl chloride with 1 to 90%, preferably 1 to 30% of a copolymerizable ethylenically unsaturated material such as, for example, vinyl acetate, vinyl butyrate, vinyl benzoate, vinylidene chloride, diethyl fumarate, diethyl maleate, other alkyl fumarates and maleates, vinyl propionate, methyl acrylate, 2-ethylhexyl acrylate, butyl acrylate and other alkyl acrylates, methyl methacrylate, ethyl methacrylate, butyl methacrylate and other alkyl methacrylates, methyl alpha-chloroacrylate, styrene, trichloroethylene, vinyl ethers such as vinyl ethyl ether, vinyl chloroethyl ether and vinyl phenyl ether, vinyl ketones such as vinyl methyl ketone and vinyl phenyl ketone, 1-fluoro-2-chloroethylene, acrylonitrile, chloroacrylonitrile, allylidene diacetate and chloroallylidene diacetate. Typical copolymers include vinyl chloride-vinyl acetate (96:4 sold commercially as VYNW), vinyl chloride-vinyl acetate (87:13), vinyl chloride-vinyl acetate-maleic anhydride (86:13:1), vinyl chloride-vinylidene chloride (95:5); vinyl chloride-diethyl fumarate (95:5), and vinyl chloride-2-ethylhexyl acrylate (80:2( In addition to the stabilizer compositions of this invention, there can also be incorporated into the halogen-containing organic polymer conventional additives such as plasticizers,

pigments, fillers, dyes, ultraviolet light absorbing agents, densifying agents and the like.

The stabilizer compositions of this invention comprise 1) a hydroxythio tin compound or mixture of hydroxythio tin compounds, 2) a mercaptan-containing organic compound or mixture of mercaptan-containing organic compounds, and, optionally, 3) an organotin compound or mixture of organotin compounds. The hydroxythio tin compounds useful in the practice of this invention contain one or more tetravalent tin atoms at least one of which has at least one hydroxythio radical bonded directly thereto. The hydroxythio tin compounds useful in this invention have structures selected from the following formulae:

(I) 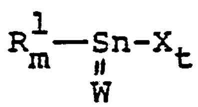 ,

(II) 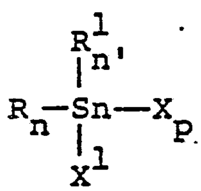 ,

(III) 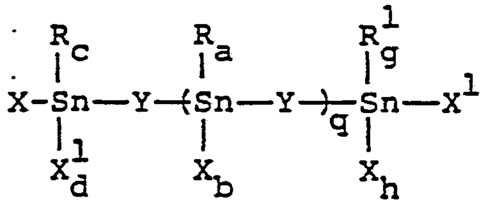 , and

(IV) 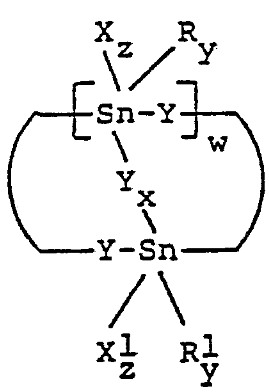 wherein

X and $X^1$ are the same or different and are selected from

$-SR^2$, Cl, Br, I, $-O-\overset{O}{\overset{\|}{C}}-R^8$, and $O-R^8$;

Y is $(S)_v$, $-W-R^3-W^1-$, $-S-R^4-\overset{O}{\overset{\|}{C}}-O$, $S-R^4-\overset{O}{\overset{\|}{C}}-O-R^5-O-\overset{O}{\overset{\|}{C}}-R^4-S-$, $-S-R^3-O-\overset{O}{\overset{\|}{C}}-R^4-S-$, $-S-R^3-O-\overset{O}{\overset{\|}{C}}-R^6-\overset{O}{\overset{\|}{C}}-O-R^3-S-$, $-O-\overset{O}{\overset{\|}{C}}-R^6-\overset{O}{\overset{\|}{C}}-O-$, $-O-\overset{O}{\overset{\|}{C}}-R^6-\overset{O}{\overset{\|}{C}}-O-R^5-O-\overset{O}{\overset{\|}{C}}-R^6-\overset{O}{\overset{\|}{C}}-O$, or $-S-\underset{\substack{|\\ R^{24}}}{CH}-(\underset{\substack{|\\ R^{24}}}{CH})_i-O-\overset{O}{\overset{\|}{C}}(\underset{\substack{|\\ R^{24}}}{CH})_i$;

W and $W^1$ are the same or different and are oxygen or sulfur;

R and $R^1$ are the same or different and are selected from alkyl, aryl, alkenyl, aralkyl, alkaryl, cycloalkyl, cycloalkenyl, $-R^9-\overset{O}{\overset{\|}{C}}-R^3$, $-R^9-\overset{O}{\overset{\|}{C}}-O-R^{12}$, $-R^9-O-\overset{O}{\overset{\|}{C}}-R^8$, $-\underset{\substack{|\\ O=C\\ |\\ R^{21}}}{CH}-\overset{O}{\overset{\|}{C}}-R^{13}$, $-R^9-O-R^{12}$, $-R^9-CN$;

$R^2$ is alkyl, alkenyl, aryl, hydroxy-substituted aryl, aralkyl, cycloalkyl, cycloalkenyl, $-R^4-\overset{O}{\overset{\|}{C}}-O-R^7$, $-R^3-O-\overset{O}{\overset{\|}{C}}-R^8$, $-R^4-O-\overset{O}{\overset{\|}{C}}-R^4-\overset{O}{\overset{\|}{C}}-O-R^8$, $-R^4-\overset{O}{\overset{\|}{C}}-O-R^3-O-\overset{O}{\overset{\|}{C}}-R^8$, $-R^3-S-R^7$, $-R^3-O-R^8$ or $-R^3OH$;

$R^3$ is alkylene of at least 2 carbon atoms, arylene, alkenylene of at least 2 carbon atoms, cycloalkylene, or cycloalkenylene;

$R^4$ is alkylene, arylene, alkenylene of at least 2 carbon atoms, cycloalkylene, or cycloalkenylene;

$R^5$ is $R^3$:

$R^6$ is a carbon to carbon single bond or $R^4$;

$R^7$ is -H or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is -H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy;

$R^{24}$ is $-\overset{O}{\overset{\|}{C}}-O-R^{16}$, $-O-\overset{O}{\overset{\|}{C}}-R^{16}$, -OH, -SH, aryl, $C_1$ to $C_{18}$ alkyl or -H;

$R^{16}$ is -H or $R^8$;

i = 0 or an integer from 1 to 6 inclusive;

m = 0 or 1, t = 1 or 2 with the proviso that m + t = 2;

n = 0, 1, 2 or 3, n' = 0, 1, 2 or 3, p = 0, 1, 2 or 3 with the proviso that n + n' + p = 3;

a = 0,1 or 2, b = 0,1 or 2, c = 0, 1 or 2, d = 0, 1 or 2, g = 0, 1 or 2, h = 0, 1 or 2 and q = 0 or an integer from 1 to 4 inclusive with the proviso that a + b = 2, c + d = 2 and g + h = 2;

v = an integer from 1 to 8 inclusive; and

w = 0, 1 or 2, x = 0 or 1, y = 0 or 1 and z = 1 or 2 with the proviso that when x = 0 then y + z = 2, when x = 1 then y + z = 1 and w = 1, when w = 2 then x = 0, and when w = 0 then x = 0, y + z = 2 and Y is $-W-R^3-W^1-$ or

$-S-R^4-\overset{O}{\overset{\|}{C}}-O-$;

with the proviso that at least one X or $X^1$ in each of formulas (I)-(IV) is $-SR^2$ where $R^2$ is $-R^3OH$.

As used herein the term alkyl represents monovalent straight or branched chain hydrocarbon radicals containing, for example, 1 to 20 carbon atoms. The term aryl refers to monovalent $C_6$-$C_{10}$ aromatic rings such as benzene and naphthalene. The term hydroxy-substituted aryl refers to $C_6$-$C_{10}$ aromatic rings having attached directly thereto at least one -OH group. The term alkenyl refers to monovalent straight or branched chain $C_2$ to $C_{20}$ hydrocarbon radicals containing at least one double bond. The term aralkyl represents a monovalent $C_1$ to $C_{20}$ hydrocarbon radical having attached thereto an aryl radical. The term alkaryl refers to monovalent aryl radicals having attached thereto at least one $C_1$-$C_{20}$ alkyl radical. The term cycloalkyl represents monovalent $C_3$-$C_8$ saturated cycloaliphatic radicals, and the term cycloalkenyl represents $C_5$-$C_8$ cycloaliphatic radicals containing at least one double bond.

The hydroxythio tin compounds useful in the practice of this invention may be prepared according to the reaction scheme below. It should be noted that in the preparation of a particular hydroxythio tin compound mixtures of the desired hydroxythio tin compound and other by-product tin compounds may be produced. Thus, the hydroxythio compounds may be prepared, for example, as follows:

$$CH_3SnCl_3 + 3\ NH_4OH + HSCH_2CH_2OH + 2\ HSCH_2CH_2O\overset{\overset{O}{\|}}{C}C_{17}H_{33} \longrightarrow$$

$$CH_3Sn{-}(SCH_2CH_2O\overset{\overset{O}{\|}}{C}C_{17}H_{33})_2$$
$$\quad \diagdown SCH_2CH_2OH$$
and/or

$$CH_3Sn{-}(SCH_2CH_2OH)_3$$
and/or

$$CH_3Sn{-}(SCH_2CH_2O\overset{\overset{O}{\|}}{C}C_{17}H_{33})_3$$
and/or

$$CH_3Sn{-}(SCH_2CH_2OH)_2$$
$$\quad | \quad SCH_2CH_2O\underset{\underset{O}{\|}}{C}C_{17}H_{33}$$

The preferred hydroxythio tin compounds useful in the practice of this invention are those compounds according to formula (I) where $R^1$ is methyl, butyl or octyl, W is sulfur, X is $-SR^2$ where $R^2$ is $-R^3OH$, m = 1 and t = 1; those compounds according to formula (II) where R is methyl or butyl, $X^1$ and X are $-SR^2$ where $R^2$ is $-R^3OH$, n = 1, n' = 0 and p = 2; those compounds according to formula (III) where R is methyl or butyl, X is $-SR^2$ where $R^2$ is $-R^3OH$, $R^1$ is methyl or butyl, $X^1$ is $-SR^2$ where $R^2$ is $-R^3OH$, Y is -S-, c = 0 or 1, d = 1 or 2, q = 0, g = 1 and h = 1; and those compounds according to formula (IV) where R is methyl or butyl, $R^1$ is methyl or butyl, X and $X^1$ are $-SR^2$ where $R^2$ is $-R^3OH$, Y is -S-, w = 1, x = 0, y = 1 and z = 1.

Examples of hydroxythio tin compounds according to formula (I) include, but are not limited to, the compounds illustrated in Table I.

TABLE I

| Hydroxythio tin compound | |
|---|---|
| A | $C_8H_{17}Sn=S$<br>/<br>$SCH_2CH_2CH_2OH$ |
| B | $HOCH_2CH_2CH_2Sn=O$<br>\|<br>$SCH_2CH(CH_3)OH$ |

Examples of hydroxythio tin compounds according to formula (II) include, but are not limited to, the compounds illustrated in Table II.

TABLE II

| Hydroxythio tin compound | |
|---|---|
| C | $CH_3Sn(SCH_2CH_2OH)$<br>\|<br>$(SCH_2CH_2OCC_{17}H_{33})_2$<br>‖<br>O |
| D | O<br>‖<br>$(C_4H_9)_2SnSCH_2COC_8H_{17}$<br>\|<br>$SCH_2CHOH$<br>\|<br>$C_9H_{19}$ |
| E | O<br>‖<br>$CH_3SnSCH_2CH_2OCCH_3$<br>\|<br>$(S(CH_2)_6OH)_2$ |

TABLE II (Continued)

| Hydroxythio tin compound | |
|---|---|
| F | 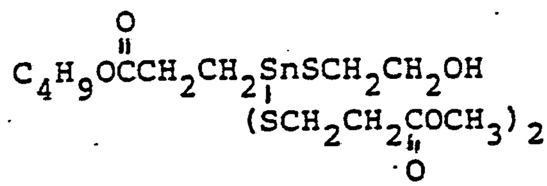 |
| G | 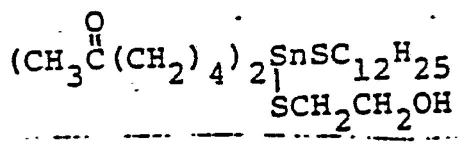 |
| H | 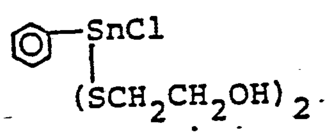 |
| I | 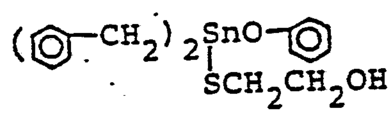 |
| J | $Sn(SCH_2CH_2OH)_4$ |
| K | $CH_3Sn(SCH_2CH_2OH)_3$ |
| L | 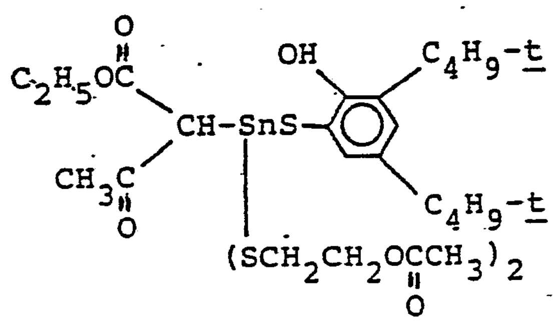 |

Examples of hydroxythio tin compounds according to formula (III) include, but are not limited to, the compounds illustrated in Table III.

TABLE III

| Hydroxythio tin compound | |
|---|---|
| M | 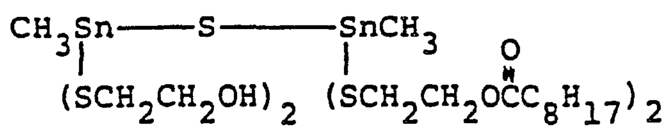 |
| N | 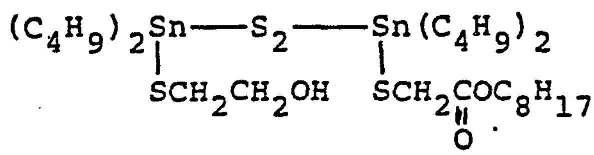 |
| P | 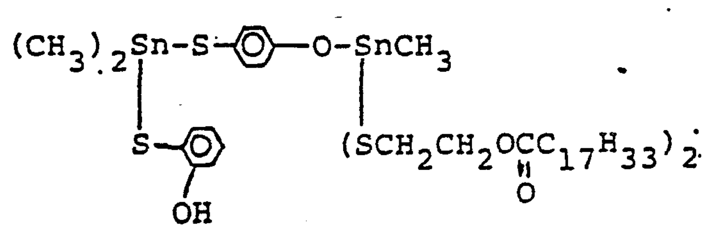 |
| Q | 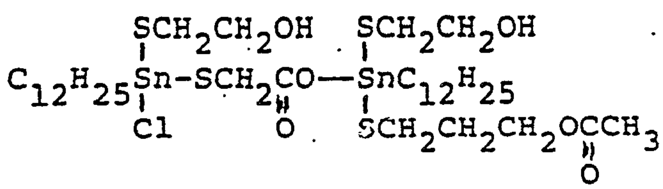 |
| R | 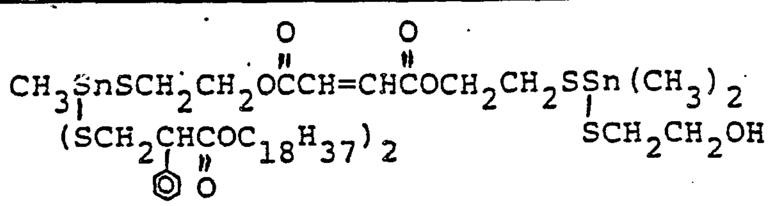 |
| S | 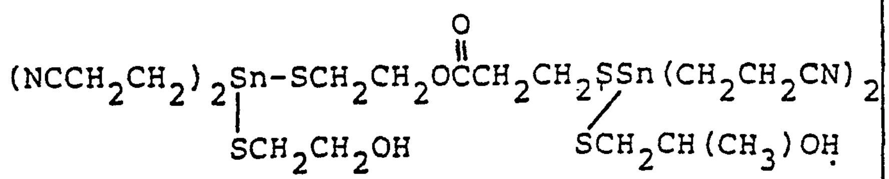 |
| SS | 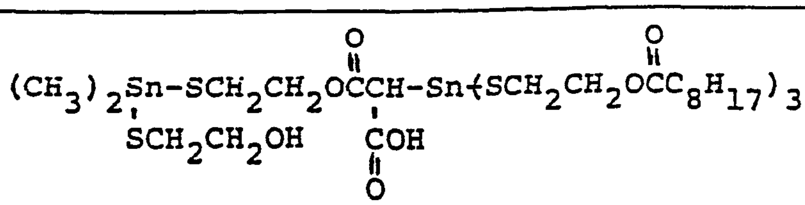 |

Examples of hydroxythio tin compounds according to formula (IV) include, but are not limited to, those compounds illustrated in Table IV.

TABLE IV

| Hydroxythio tin compound | |
|---|---|
| T | 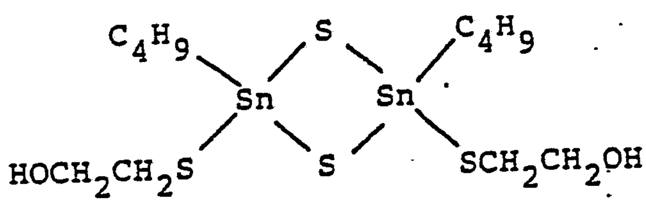 |

The mercaptan-containing organic compounds useful in this invention include hydrocarbyl mercaptans, mercapto esters, mercapto alcohols, and mercapto acids. These mercaptan-containing organic compounds have structures illustrated by the following formulae:

(V) 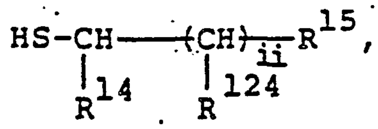

(Va) 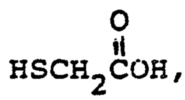

(VI) 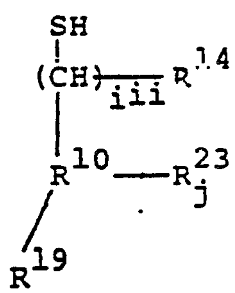

(VII) 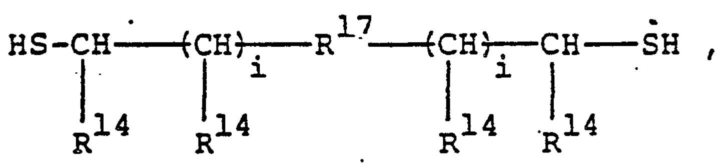

(VIIa) 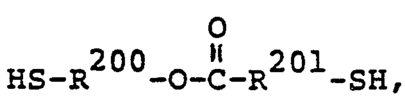

(VIII) 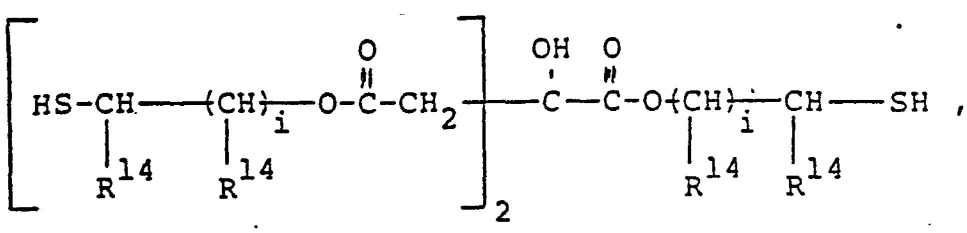

(IX) 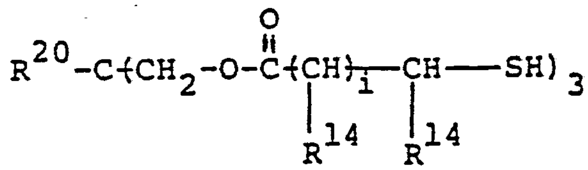 , and

(X) 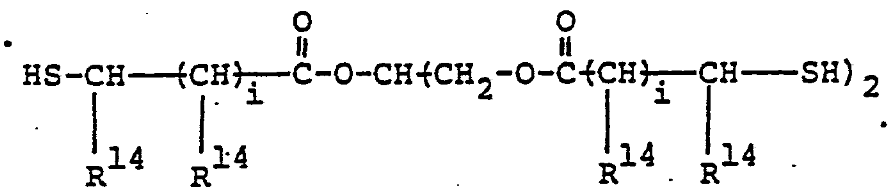 where

$R^{14}$ is -H, aryl or $C_1$ to $C_{18}$ alkyl;
i is as previously defined;

$R^{10}$ is cycloalkyl, cycloalkenyl or phenyl;

$R^{15}$ is $-\overset{O}{\overset{\|}{C}}-O-R^{116}$, $-O-\overset{O}{\overset{\|}{C}}-R^{116}$, -OH, -SH, aryl, $C_1$ to $C_{18}$ alkyl, or -H;

$R^{116}$ is -H or $-R^8$;

$R^{17}$ is $-O-\overset{O}{\overset{\|}{C}}-R^{18}-\overset{O}{\overset{\|}{C}}-O-$ or $O-\overset{O}{\overset{\|}{C}}-CH=CH-\overset{O}{\overset{\|}{C}}-O-$;

$R^{18}$ is arylene, $C_1$ to $C_8$ alkylene, or 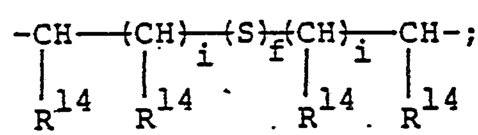

$R^{19}$ is -H or a divalent group which may contain halogen, hydroxy, mercapto or alkyl substituents and which combines with $R^{10}$ when $R^{10}$ is phenyl to form a naphthalene ring;

$R^{20}$ is $-CH_3$, $-CH_2CH_3$, or 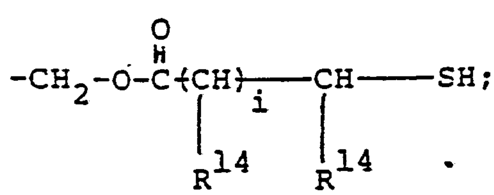

$R^{23}$ is $-\overset{\overset{O}{\|}}{C}-O-R^{116}$, $-O-\overset{\overset{O}{\|}}{C}-R^{116}$, -SH, aryl, $C_1$ to $C_{18}$ alkyl, -OH or -H;

$R^{124}$ is $-\overset{\overset{O}{\|}}{C}-O-R^{116}$, $-O-\overset{\overset{O}{\|}}{C}-R^{116}$, -OH, -SH, aryl, $C_1$ to $C_{18}$ alkyl or -H;

$R^{200}$ and $R^{201}$ are the same or different and are alkylene, alkenylene, arylene, cycloalkylene or cycloalkenylene; or alkylene, alkenylene, arylene, cycloalkylene or cycloalkenylene each substituted with one or two -R, $-O-R^7$, $-R^9-O-R^7$, $-O-\overset{\overset{O}{\|}}{C}-R^8$ or $-O-\overset{\overset{O}{\|}}{C}-R^4-\overset{\overset{O}{\|}}{C}-O-R^8$ groups; R, $R^7$, $R^8$, $R^4$ and $R^9$ are as previously defined;

ii = 0 or an integer from 1 to 6 inclusive, with the proviso that when $R^{15}$ is $-\overset{\overset{O}{\|}}{C}-O-R^{116}$ where $R^{116}$ is -H, then ii = an integer from 1 to 6 inclusive;

iii = 0 or an integer from 1 to 6 inclusive, with the proviso that when $R^{23}$ is $-\overset{\overset{O}{\|}}{C}-O-R^{116}$ where $R^{116}$ is -H, and $R^{23}$ is bonded to the same ring carbon atom as the $-(\underset{\underset{R^{14}}{|}}{CH})_{iii}SH$ group, then iii = an integer from 1 to 6 inclusive.

j = 0, 1, 2 or 3; and

f = 1 or 2.

The mercaptan-containing organic compounds useful in this invention are well known compounds (see, for example, U. S. Patents No. 3,503,924 and 3,507,827).

The preferred mercaptan-containing organic compounds useful in this invention are those compounds according to formula (V) where $R^{14}$ is -H, $R^{124}$ is -H, $R^{15}$ is $-O\overset{\overset{O}{\|}}{C}R^{116}$ and ii= 1; those compounds according to formula (VI) where $R^{10}$ is phenyl, $R^{14}$ is -H, $R^{23}$ is -H, $R^{19}$ is -H, iii= 1 and j = 1; those compounds according to formula (VII) where $R^{14}$ is -H, $R^{17}$ is $-O\overset{\overset{O}{\|}}{C}CH=CH\overset{\overset{O}{\|}}{C}O-$ and i = 1; those compounds according to

formula (VIIa) where $R^{200}$ is $-CH_2CH_2-$ or $-CH_2\underset{C_9H_{19}}{CH}-$, and $R^{201}$ is $-CH_2-$ or $-\underset{OH}{CH}-$; those compounds according to formula (VIII) where $R^{14}$ is -H and i = 1; those compounds according to formula (IX) where $R^{20}$ is $-C_2H_5$ or $-CH_2O\overset{O}{\overset{\|}{C}}\underset{R^{14}}{(CH)}_i\underset{R^{14}}{CH}SH$, $R^{14}$ is -H and i = 1; and those compounds according to formula (X) where $R^{14}$ is -H and i = 1. Of the foregoing, the mercaptan-containing organic compounds according to formula (V) are more preferred.

Examples of the mercaptan-containing organic compounds described by formula (V) include, but are not limited to, the following compounds:

$HSC_{12}H_{25}$

$HSCH_2\overset{O}{\overset{\|}{C}}OC_2H_5$

$HSCH_2\overset{O}{\overset{\|}{C}}OC_8H_{17}$

$HS\underset{CH_3}{CH}\overset{O}{\overset{\|}{C}}OC_8H_{17}$

$HSCH_2\underset{CH_3}{CH}O\overset{O}{\overset{\|}{C}}C_8H_{17}$

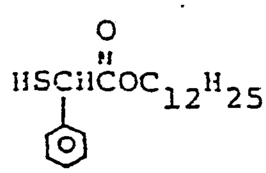

$$HSCH_2\overset{O}{\overset{\|}{C}}OC_{18}H_{37}$$

$$HSCH_2CH_2\overset{O}{\overset{\|}{C}}OC_8H_{17}$$

$$HSCH_2CH_2\overset{O}{\overset{\|}{C}}OC_{11}H_{23}$$

$$HSCH_2CH_2O\overset{O}{\overset{\|}{C}}C_{17}H_{35}$$

$$HSCH_2CH_2O\overset{O}{\overset{\|}{C}}C_{17}H_{33}$$

$$HSCH_2CH_2CH_2O\overset{O}{\overset{\|}{C}}C_8H_{17}$$

$$HSCH_2\underset{C_9H_{19}}{\underset{|}{C}}HO\overset{O}{\overset{\|}{C}}CH_3$$

$$HSCH_2CH_2O\overset{O}{\overset{\|}{C}}C_{11}H_{23}$$

$$HS\underset{C_{10}H_{21}}{\underset{|}{C}}H\overset{O}{\overset{\|}{C}}OCH_3$$

$$HSCH_2CH_2OH$$

$HSCH_2CH_2CH_2OH$

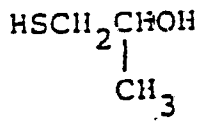

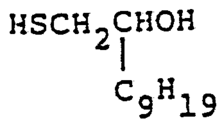

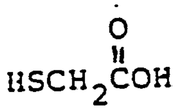

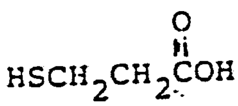

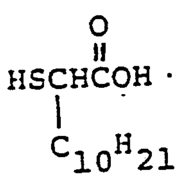

Examples of the mercaptan-containing organic compounds described by formula (VI ) include, but are not limited to, the following compounds:

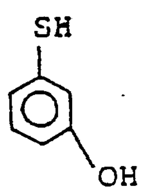

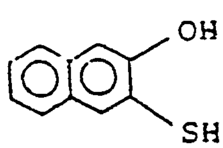

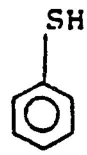

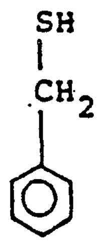

Examples of mercaptan-containing organic compounds represented by formula (VII ) include, but are not limited to, the following compounds:

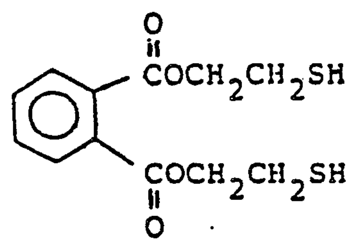

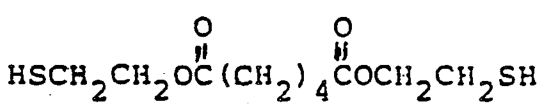

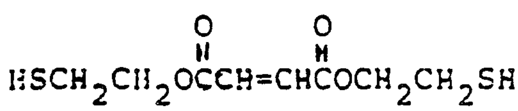

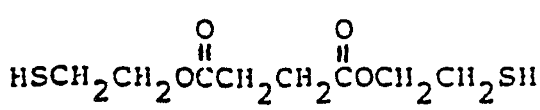

The mercaptan-containing organic compounds represented by formula (VIIa) are exemplified by, but are not limited to, the following:

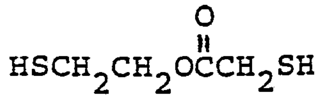

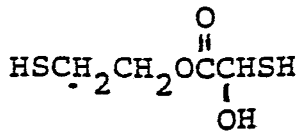

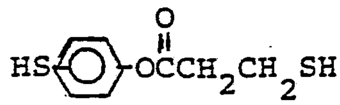

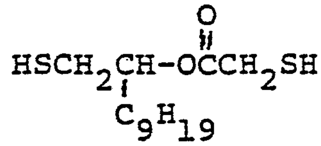

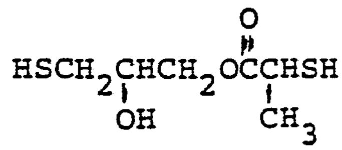

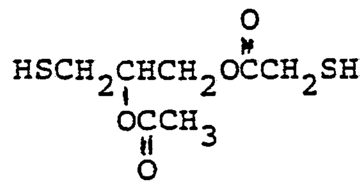

An example of the mercaptan-containing organic compounds described by formula (VIII) includes, but is not limited to, the following:

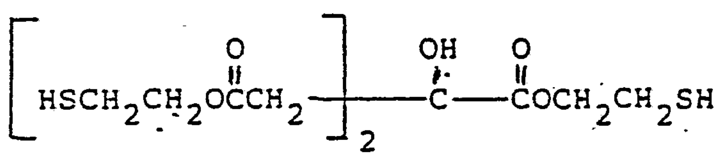

The mercaptan-containing organic compounds represented by formula (IX) are exemplified by, but are not limited to, the following;

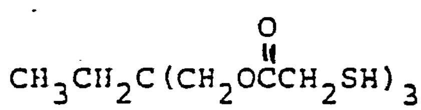

The mercaptan-containing organic compounds represented by formula (X) are exemplified by, but are not limited to, the following:

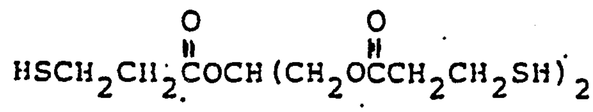

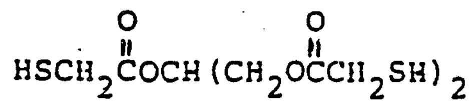

The organotin compounds useful in this invention contain one or more tetravalent tin atoms which each have at least one direct tin to carbon bond and have structures selected from the following formulae:

(XI) 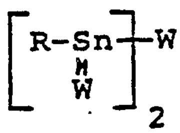 ,

(XII) 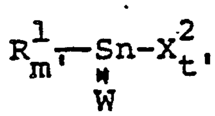 ,

(XIIa) 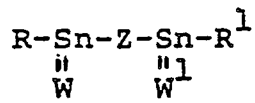

(XIII) 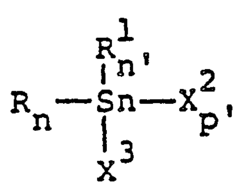

(XIV) 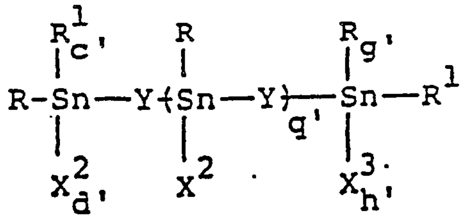 and

(XV) 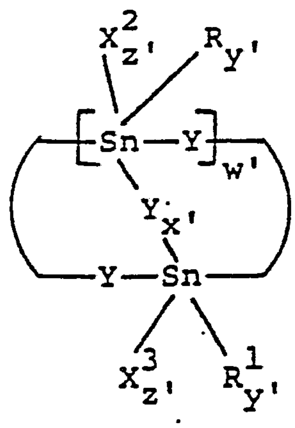 wherein

R, W, $R^1$, and Y are as previously defined;

$X^2$ and $X^3$ are the same or different and are selected from $-SR^{25}$, Cl, Br, I, $-O-\overset{O}{\overset{\|}{C}}-R^8$ and $-O-R^8$ with the proviso that in formula (XV) where z' = 1 and in formulae (XIII) and (XIV) at least one $X^2$ or $X^3$ is $-SR^{25}$;

$R^{25}$ is alkyl, alkenyl, aryl, aralkyl, cycloalkyl, cycloalkenyl, $-R^4-\overset{O}{\overset{\|}{C}}-O-R^7$, $-R^3-O-\overset{O}{\overset{\|}{C}}-R^8$, $-R^4-O-\overset{O}{\overset{\|}{C}}-R^4-\overset{O}{\overset{\|}{C}}-O-R^8$, $-R^4-\overset{O}{\overset{\|}{C}}-O-R^3-O-\overset{O}{\overset{\|}{C}}-R^8$, $-R^3-S-R^7$ or $-R^3-O-R^8$;

Z is $-S-R^4-\overset{O}{\overset{\|}{C}}-O-R^5-O-\overset{O}{\overset{\|}{C}}-R^4-S-$, $-S-R^3-O-\overset{O}{\overset{\|}{C}}-R^4-S-$, $-S-R^3-O-\overset{O}{\overset{\|}{C}}-R^6-\overset{O}{\overset{\|}{C}}-O-R^3-S-$;

$R^3$, $R^4$, $R^5$, $R^6$, $R^7$ and $R^8$ are as previously defined;

m' = 1 or 2, t' = 0 or 1 with the proviso that m' + t' = 2;

n and n' are as previously defined, p' = 0, 1 or 2 with the proviso that n + n' = 1, 2 or 3 and n + n' + p' = 3;

c' = 0 or 1, d' = 1 or 2, q' is 0 or an integer from 1 to 4 inclusive, g' = 0 or 1 and h' = 1 or 2 with the proviso that c' + d' = 2 and g' + h' = 2; and

$w' = 0$, 1 or 2, $x' = 0$ or 1, $y' = 1$ or 2 and $z' = 0$ or 1 with the proviso that when $x' = 0$ then $y' + z' = 2$, when $x' = 1$ then $y' = 1$, $z' = 0$ and $w' = 1$, when $w' = 2$ then $x' = 0$, and when $w' = 0$ then $x' = 0$, $y' + z' = 2$

and Y is $-W-R^3-W^1-$ or $-S-R^4-\overset{O}{\overset{\|}{C}}-O-$.

The organotin compounds useful in this invention are prepared by methods well known in the art. For example, methods of preparing these organotin compounds are disclosed in U. S. Patents 3,565,930, 3,869,487, 3,979,359, 4,118,371, 4,134,878 and 4,183,846.

The preferred organotin compounds useful in this invention are those compounds according to formula (XI) where R is methyl, butyl or octyl and W is sulfur; those compounds according to formula (XII) where $R^1$ is methyl or butyl, W is sulfur, $X^2$ is $-SR^{25}$ where $R^{25}$ is $-R^3O\overset{O}{\overset{\|}{C}}R^8$, $m' = 1$ and $t' = 1$; those compounds according to formula (XIIa) where R and $R^1$ are methyl, butyl, octyl or $-R^9-\overset{O}{\overset{\|}{C}}-O-R^{12}$, W and $W^1$ are oxygen or sulfur; and Z is $-S-R^3-O-\overset{O}{\overset{\|}{C}}-R^6-\overset{O}{\overset{\|}{C}}-O-R^3-S-$, $-S-R^3-O-\overset{O}{\overset{\|}{C}}-R^4-S-$ or $-S-R^4-\overset{O}{\overset{\|}{C}}-O-R^5-O-\overset{O}{\overset{\|}{C}}-R^4-S-$; those compounds according to formula (XIII) where R is methyl or butyl, $X^2$ and $X^3$ are $-SR^{25}$ where $R^{25}$ is $-R^3O\overset{O}{\overset{\|}{C}}R^8$, $n = 1$, $n' = 0$ and $p' = 2$; those compounds according to formula (XIV)

where R is methyl, $X^2$ is $-SR^{25}$ where $R^{25}$ is $-R^3OC(=O)R^8$, $R^1$ is methyl, $X^3$ is $-SR^{25}$ where $R^{25}$ is $-R^3OC(=O)R^8$, Y is -S-, c' = 0, d' = 2, q' = 0, g' = 0 and h' = 2; and those compounds according to formula (XV) where R and $R^1$ are methyl, Y is -S-, w' = 1, x' = 1, y' = 1 and z' = 0.

Examples of organotin compounds which are useful in this invention include, but are not limited to, those illustrated in Tables V-VIII below. Thus, representative of the organotin compounds described by formulae (XI) and (XII) are those illustrated in Table V below.

Examples of the organotin compounds represented by formula (XIIa) are illustrated in Table Va below.

Examples of the organotin compounds represented by formula (XIII) are illustrated in Table VI below.

The organotin compounds illustrated in Table VII below are representative of compounds described by formula (XIV).

The organotin compound illustrated in Table VIII below is representative of compounds described by formula (XV).

TABLE V

(XI) $\left[\begin{matrix} R\text{-}\underset{\underset{W}{\|}}{Sn} \end{matrix}\right]_2\text{-}W$

(XII) $R^1_{m'}\text{-}\underset{\underset{W}{\|}}{Sn}\text{-}X^2_{t'}$

| Organotin Compound No. | R | $R^1$ | W | $X^2$ | m' | t' |
|---|---|---|---|---|---|---|
| 1 | $-C_4H_9$ | - | S | - | - | - |
| 2 | $-C_8H_{17}$ | - | O | - | - | - |
| 3 | - | $-CH_3$ | S | $-SCH_2CH_2O\overset{\overset{O}{\|}}{C}C_{17}H_{33}$ | 1 | 1 |
| 4 | - | $-CH_3$ | S | $-SCH_2\overset{\overset{O}{\|}}{C}OC_8H_{17}$ | 1 | 1 |
| 5 | - | $-CH_2CH_2\overset{\overset{O}{\|}}{C}OC_4H_9$ | S | $-SCH_2CH_2\overset{\overset{O}{\|}}{C}OC_{18}H_{37}$ | 1 | 1 |
| 6 | - | $-C_4H_9$ | S | - | 2 | 0 |
| 7 | - | $-C_8H_{17}$ | O | - | 2 | 0 |

TABLE Va

(XIIa) $R-\underset{W}{\overset{}{Sn}}-Z-\underset{W^1}{Sn}-R^1$

| Organotin Compound No. | R and $R^1$ | W | $W^1$ | Z |
|---|---|---|---|---|
| 7a | $-CH_3$ | S | S | $-SCH_2CH_2O\overset{O}{C}(CH_2)_4\overset{O}{C}OCH_2CH_2-S-$ |
| 7b | $-C_4H_9$ | S | S | $-SCH_2CH_2O\overset{O}{C}CH_2CH_2S-$ |
| 7c | $-C_8H_{17}$ | O | S | $-SCH_2\overset{O}{C}OCH_2CH_2O\overset{O}{C}CH_2S-$ |
| 7d | $-CH_2CH_2\overset{O}{C}OC_4H_9$ | S | S | $-SCH_2CH_2O\overset{O}{C}CH=CH\overset{O}{C}OCH_2CH_2S-$ |
| 7e | $-CH_3$ | S | S | $-SCH_2\underset{C_9H_{19}}{CH}-O\overset{O}{C}CH=CH\overset{O}{C}O\underset{C_9H_{19}}{CH}CH_2S-$ |
| 7f | $-C_4H_9$ | S | S | $-S\underset{OH}{CH}\overset{O}{C}O(CH_2)_2S-$ |
| 7g | $-C_4H_9$ | O | O | $-S\underset{O\underset{O}{C}CH=CH\underset{O}{C}OCH_3}{CH}\overset{O}{C}OCH_2CH_2CH_2S-$ |
| 7h | $-CH_3$ | S | S | $-SCH_2\underset{O}{C}OCH_2\underset{(CH_2OH)_2}{C}CH_2O\overset{O}{C}CH_2S-$ |
| 7i | $-CH_3$ | S | S | $-SCH_2\overset{O}{C}OCH_2\underset{(CH_2O\overset{O}{C}CH_3)_2}{C}CH_2O\overset{O}{C}CH_2S-$ |

TABLE VI

(XIII) 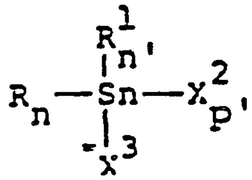

| Organotin Compound No. | R | $R^1$ | $X^2$ and $X^3$ | n | n' | p |
|---|---|---|---|---|---|---|
| 8 | $-CH_3$ | - | $-SCH_2\overset{\overset{O}{\|}}{C}OC_8H_{17}$ | 1 | 0 | 2 |
| 9 | $-C_4H_9$ | - | $-SCH_2CH_2O\overset{\overset{O}{\|}}{C}C_7H_{15}$ | 1 | 0 | 2 |
| 10 | $-CH_2CH_2\overset{\overset{O}{\|}}{C}OC_4H_9$ | - | $-SCH_2CH_2O\overset{\overset{O}{\|}}{C}CH_3$ | 2 | 0 | 1 |
| 11 | $-CH_3$ | - | $-SCH_2CH_2O\overset{\overset{O}{\|}}{C}C_{17}H_{35}$ | 2 | 0 | 1 |

TABLE VII

(XIV) 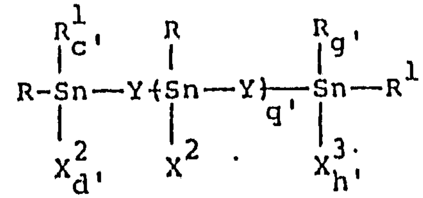

| Organotin Compound No. | R and $R^1$ | $X^2$ | $X^3$ | Y | c' | d' | q' | g' | h' |
|---|---|---|---|---|---|---|---|---|---|
| 12 | $-CH_3$ | $-SCH_2CH_2O\overset{O}{C}C_{11}H_{23}$ | Same as X | -S- | 0 | 2 | 0 | 0 | 2 |
| 13 | $-C_8H_{17}$ | $-SCH_2\overset{O}{C}OC_{13}H_{27}$ | do | -S- | 1 | 1 | 0 | 1 | 1 |
| 14 | $-C_4H_9$ | $-SCH_2CH_2O\overset{O}{C}C_8H_{17}$ | do | $-SCH_2CH_2\overset{O}{C}O-$ | 1 | 1 | 0 | 1 | 1 |
| 15 | $-CH_2CH_2\overset{O}{C}OC_4H_9$ | $-SCH_2CH_2\overset{O}{C}OC_8H_{17}$ | do | -S-S- | 0 | 2 | 0 | 0 | 2 |
| 16 | $-CH_3$ | $-SCH_2CH_2O\overset{O}{C}C_{17}H_{33}$ | do | $-SCH_2\overset{O}{C}OC_4H_8O\overset{O}{C}CH_2S-$ | 0 | 2 | 1 | 0 | 2 |
| 17 | $-CH_3$ | $-SCH_2CH_2O\overset{O}{C}CH=CH\overset{O}{C}OCH_3$ | do | -S- | 0 | 2 | 0 | 0 | 2 |
| 18 | $-C_4H_9$ | $-SCH_2CH_2O\overset{O}{C}C_{17}H_{33}$ | Cl | -S- | 1 | 1 | 0 | 1 | 1 |
| 19 | $-C_4H_9$ | $-SCH_2CH_2O\overset{O}{C}C_8H_{17}$ | Same as X | $-S-CH_2\overset{O}{C}O-$ | 0 | 2 | 0 | 0 | 2 |
| 20 | $-CH_3$ | $-SCH_2CH_2O\overset{O}{C}C_{11}H_{23}$ | do | -S- | 0 | 2 | 0 | 0 | 2 |
| 21 | $-C_4H_9$ | $-SCH_2CH_2O\overset{O}{C}C_7H_{15}$ | do | 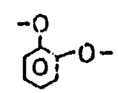 | 0 | 2 | 0 | 0 | 2 |

TABLE VIII

(XV) 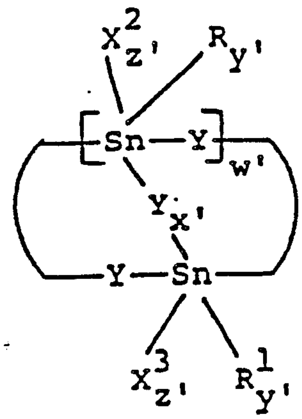

| Organotin Compound No. | R and $R^1$ | $X^2$ and $X^3$ | Y | w' | x' | y' | z' |
|---|---|---|---|---|---|---|---|
| 22 | $-CH_3$ | - | 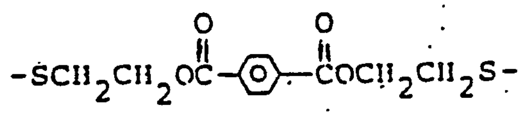 | 1 | 1 | 1 | 0 |

As used in Tables V-VIII above, and throughout this specification, the radicals $-C_4H_9$, $-C_8H_{17}$, $-C_{12}H_{25}$, $-C_9H_{19}$ and $-C_{10}H_{21}$ represent n-butyl, n-octyl, n-dodecyl, n-nonyl and n-decyl respectively.

The carboxyl radicals $-O\overset{\overset{O}{\|}}{C}C_{17}H_{33}$, $-O\overset{\overset{O}{\|}}{C}C_{17}H_{35}$, $-O\overset{\overset{O}{\|}}{C}C_7H_{15}$, $-O\overset{\overset{O}{\|}}{C}C_{11}H_{23}$ and $-O\overset{\overset{O}{\|}}{C}C_8H_{17}$ are derived from oleic acid, stearic acid, n-octanoic acid, lauric acid, and pelargonic acid respectively. Likewise, the radicals $-OC_{13}H_{27}$, $-OC_{18}H_{37}$, and $-OC_8H_{17}$ are derived from tridecanol, stearyl alcohol and iso-octanol respectively.

Also, it should be noted that, in an effort to simplify the foregoing formulas and render them as clear and concise as possible, some letters are used more than once in the same formula and/or in more than one formula. Thus, for example, X appears three times in formula III, and also in formulae I, II, IV, XII, XIII, XIV and XV; $R^1$ appears in formulae I, II, III and XII-XV; Y is found in formulae III, IV, XIV and XV; and i is used in formulae III, IV, XIV and XV (as part of the definition of Y), and in formulae VII, VIII, IX and X. It is intended that, in those instances where the same letter is used either more than once within the same formula or in more than one formula, that letter represents at each independent occurence any group contained in the set of groups encompassed by its definition, or any and all subsets thereof. It is further intended that any modification or limitation in the definition of a particular letter at one occurence does not necessarily affect its definition at any other occurence. For example, should the definition of X in formula I be limited from $-SR^2$, Cl, Br, I, $-O\overset{\overset{O}{\|}}{C}R^8$ or $-OR^8$ to Cl, Br or I, X in each of formulae II, IV, XII, XIII, XIV and XV may still represent at each independent occurence the set of groups consisting of $-SR^2$, Cl, Br, I, $-O\overset{\overset{O}{\|}}{C}-R^8$ and $-O-R^8$, or

any and all subsets thereof such as, for example, $-SR^2$, $-O\overset{O}{\overset{\parallel}{C}}R^8$ and $-OR^8$; or -Cl, Br, I and $-OR^8$.

In one embodiment of this invention, the stabilizer compositions comprise: 1) a hydroxythio tin compound, or mixture of hydroxythio tin compounds selected from compounds having formulae I, II, III and/or IV; 2) a mercaptan-containing organic compound or mixture of mercaptan-containing organic compounds selected from compounds having formulae V, Va, VI, VII, VIIa, VIII, IX and/or X and, optionally, 3) an organotin compound or mixture of organotin compounds selected from compounds having formulae XI, XII, XIIa, XIII, XIV and/or XV. Thus, the stabilizer compositions of this embodiment comprise:

A. a hydroxythio tin compound or mixture of hydroxythio tin compounds selected from compounds having the formulae:

(I) 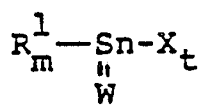 ,

(II) 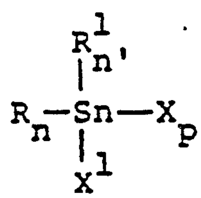 ,

(III) 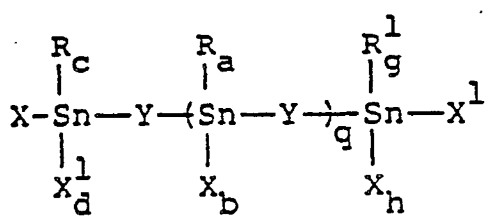 , and

(IV) 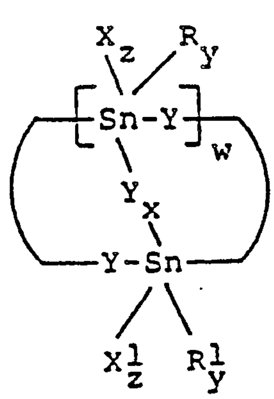 wherein

X and $X^1$ are the same or different and are selected from

$-SR^2$, Cl, Br, I, $-O-\overset{O}{\overset{\|}{C}}-R^8$, and $O-R^8$;

Y is $-(S)_{v}-$, $-W-R^3-W^1-$, $-S-R^4-\overset{O}{\overset{\|}{C}}-O$, $S-R^4-\overset{O}{\overset{\|}{C}}-O-R^5-O-\overset{O}{\overset{\|}{C}}-R^4-S-$, $-S-R^3-O-\overset{O}{\overset{\|}{C}}-R^4-S-$, $-S-R^3-O-\overset{O}{\overset{\|}{C}}-R^6-\overset{O}{\overset{\|}{C}}-O-R^3-S-$, $-O-\overset{O}{\overset{\|}{C}}-R^6-\overset{O}{\overset{\|}{C}}-O-$, $-O-\overset{O}{\overset{\|}{C}}-R^6-\overset{O}{\overset{\|}{C}}-O-R^5-O-\overset{O}{\overset{\|}{C}}-R^6-\overset{O}{\overset{\|}{C}}-O$, or $-S-\underset{R^{24}}{\underset{|}{CH}}-(\underset{R^{24}}{\underset{|}{CH}})_i-O-\overset{O}{\overset{\|}{C}}-(\underset{R^{24}}{\underset{|}{CH}})_i$;

W and $W^1$ are the same or different and are oxygen or sulfur;

R and $R^1$ are the same or different and are selected from alkyl, aryl, alkenyl, aralkyl, alkaryl, cycloalkyl, cycloalkenyl, $-R^9-\overset{O}{\overset{\|}{C}}-R^8$, $-R^9-\overset{O}{\overset{\|}{C}}-O-R^{12}$, $-R^9-O-\overset{O}{\overset{\|}{C}}-R^8$, $-CH(C(=O)R^{21})-\overset{O}{\overset{\|}{C}}-R^{13}$, $-R^9-O-R^{12}$, $-R^9-CN$;

$R^2$ is alkyl, alkenyl, aryl, hydroxy-substituted aryl, aralkyl, cycloalkyl, cycloalkenyl, $-R^4-\overset{O}{\overset{\|}{C}}-O-R^7$, $-R^3-O-\overset{O}{\overset{\|}{C}}-R^8$, $-R^4-O-\overset{O}{\overset{\|}{C}}-R^4-\overset{O}{\overset{\|}{C}}-O-R^8$, $-R^4-\overset{O}{\overset{\|}{C}}-O-R^3-O-\overset{O}{\overset{\|}{C}}-R^8$, $-R^3-S-R^7$, $-R^3-O-R^8$ or $-R^3OH$;

$R^3$ is alkylene of at least 2 carbon atoms, arylene, alkenylene of at least 2 carbon atoms, cycloalkylene, or cycloalkenylene;

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^7$ is -H or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is -H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy;

$R^{24}$ is $-\overset{O}{\overset{\|}{C}}-O-R^{16}$, $-O-\overset{O}{\overset{\|}{C}}-R^{16}$, -OH, -SH, aryl, $C_1$ to $C_{18}$ alkyl or -H;

$R^{16}$ is -H or $R^8$;

i = 0 or an integer from 1 to 6 inclusive;

m = 0 or 1, t = 1 or 2 with the proviso that m + t = 2;

n = 0, 1, 2 or 3, n' = 0, 1, 2 or 3, p = 0, 1, 2 or 3 with the proviso that n + n' + p = 3;

a = 0,1 or 2, b = 0,1 or 2, c = 0, 1 or 2, d = 0, 1 or 2, g = 0, 1 or 2, h = 0, 1 or 2 and q = 0 or an integer from 1 to 4 inclusive with the proviso that a + b = 2, c + d = 2 and g + h = 2;

v = an integer from 1 to 8 inclusive; and

w = 0, 1 or 2, x = 0 or 1, y = 0 or 1 and z = 1 or 2 with the proviso that when x = 0 then y + z = 2, when x = 1 then y + z = 1 and w = 1, when w = 2 then x = 0, and when w = 0 then x = 0, y + z = 2 and Y is $-W-R^3-W^1-$ or $-S-R^4-\overset{O}{\overset{\|}{C}}-O-$;

with the proviso that at least one X or $X^1$ in each of formulae (I)-(IV) is $-SR^2$ where $R^2$ is $-R^3OH$; and

B. a mercaptan-containing organic compound or mixture of mercaptan-containing organic compounds selected from compounds having the formulae:

(V) 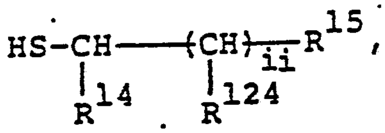

(Va) 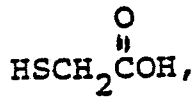

(VI) 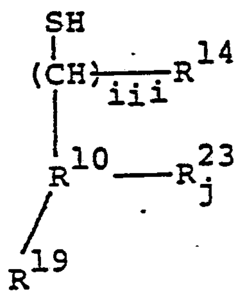

(VII) 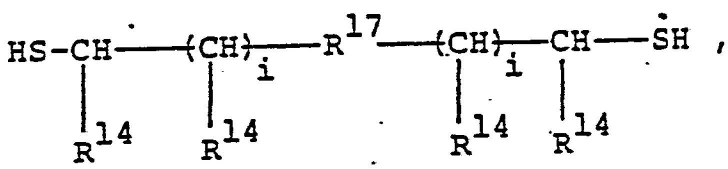

(VIIa) 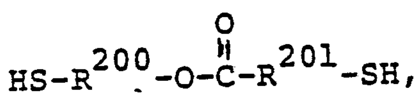

(VIII) 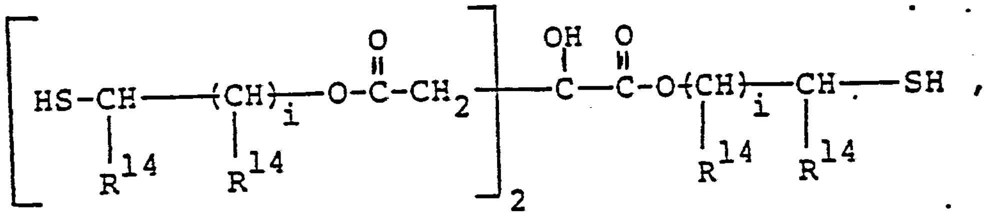

(IX) 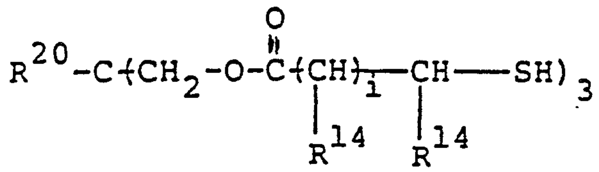 , and

(X) 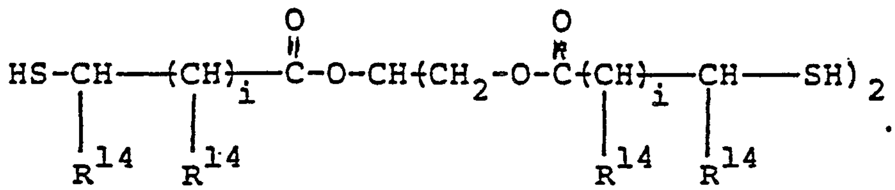 where

$R^{14}$ is -H, aryl or $C_1$ to $C_{18}$ alkyl;
i is as previously defined;

$R^{10}$ is cycloalkyl, cycloalkenyl or phenyl;

$R^{15}$ is $-\overset{O}{\overset{\|}{C}}-O-R^{116}$, $-O-\overset{O}{\overset{\|}{C}}-R^{116}$, -OH, -SH, aryl, $C_1$ to $C_{18}$ alkyl, or -H;

$R^{116}$ is -H or $-R^8$;

$R^{17}$ is $-O-\overset{O}{\overset{\|}{C}}-R^{18}-\overset{O}{\overset{\|}{C}}-O-$ or $O-\overset{O}{\overset{\|}{C}}-CH=CH-\overset{O}{\overset{\|}{C}}-O-$;

$R^{18}$ is arylene, $C_1$ to $C_8$ alkylene, or 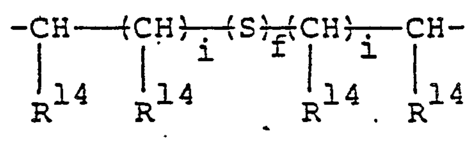;

$R^{19}$ is -H or a divalent group which may contain halogen, hydroxy, mercapto or alkyl substituents and which combines with $R^{10}$ when $R^{10}$ is phenyl to form a naphthalene ring;

$R^{20}$ is $-CH_3$, $-CH_2CH_3$, or 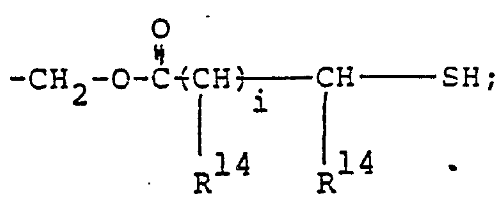;

$R^{23}$ is $-\overset{O}{\overset{\|}{C}}-O-R^{116}$, $-O-\overset{O}{\overset{\|}{C}}-R^{116}$, -SH, aryl, $C_1$ to $C_{18}$ alkyl, -OH or -H

$R^{124}$ is $-\overset{O}{\overset{\|}{C}}-O-R^{116}$, $-O-\overset{O}{\overset{\|}{C}}-R^{116}$, -OH, -SH, aryl, $C_1$ to $C_{18}$ alkyl or -H;

$R^{200}$ and $R^{201}$ are the same or different and are alkylene, alkenylene, arylene, cycloalkylene or cycloalkenylene; or alkylene, alkenylene, arylene, cycloalkylene or cycloalkenylene each substituted with one or two -R, $-O-R^7$, $-R^9-O-R^7$, $-O-\overset{O}{\overset{\|}{C}}-R^8$ or $-O-\overset{O}{\overset{\|}{C}}-R^4-\overset{O}{\overset{\|}{C}}-O-R^8$ groups; R, $R^7$, $R^8$, $R^4$ and $R^9$ are as previously defined;

ii = 0 or an integer from 1 to 6 inclusive, with the proviso that when $R^{15}$ is $-\overset{O}{\overset{\|}{C}}-O-R^{116}$ where $R^{116}$ is -H, then ii = an integer from 1 to 6 inclusive;

iii = 0 or an integer from 1 to 6 inclusive, with the proviso that when $R^{23}$ is $-\overset{O}{\overset{\|}{C}}-O-R^{116}$ where $R^{116}$ is -H, and $R^{23}$ is bonded to the same ring carbon atom as the $-(\underset{R^{14}}{\underset{|}{C}H})_{iii}SH$ group, then iii = an integer from 1 to 6 inclusive.

j = 0, 1, 2 or 3; and

f = 1 or 2.; and, optionally,

C. an organotin compound or mixture of organotin compounds selected from compounds having the formulae:

(XI) 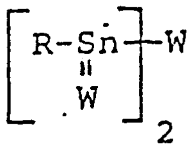 ,

(XII) 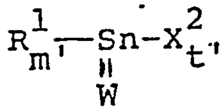 ,

(XIIa) 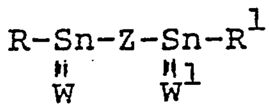

(XIII) 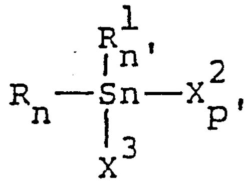

(XIV) 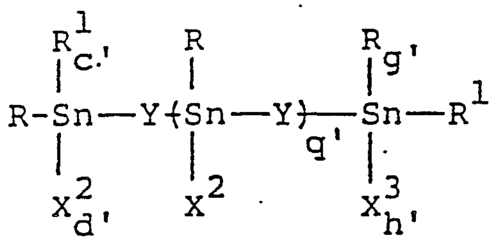 and

(XV) 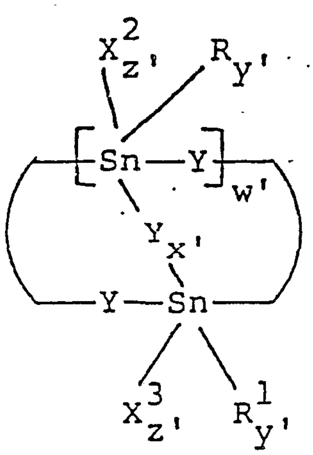 wherein

R, W, $R^1$, and Y are as previously defined;

$X^2$ and $X^3$ are the same or different and are selected from

$-SR^{25}$, Cl, Br, I, $-O-\overset{\overset{O}{\|}}{C}-R^8$ and $-O-R^8$ with the proviso that in formula (XV) where z' = 1 and in formulae (XIII) and (XIV) at least one $X^2$ or $X^3$ is $-SR^{25}$;

$R^{25}$ is alkyl, alkenyl, aryl, aralkyl,

cycloalkyl, cycloalkenyl, $-R^4-\overset{\overset{O}{\|}}{C}-O-R^7$, $-R^3-O-\overset{\overset{O}{\|}}{C}-R^8$, $-R^4-O-\overset{\overset{O}{\|}}{C}-R^4-\overset{\overset{O}{\|}}{C}-O-R^8$, $-R^4-\overset{\overset{O}{\|}}{C}-O-R^3-O-\overset{\overset{O}{\|}}{C}-R^8$, $-R^3-S-R^7$ or $-R^3-O-R^8$;

Z is $-S-R^4-\overset{\overset{O}{\|}}{C}-O-R^5-O-\overset{\overset{O}{\|}}{C}-R^4-S-$, $-S-R^3-O-\overset{\overset{O}{\|}}{C}-R^4-S-$,

$-S-R^3-O-\overset{\overset{O}{\|}}{C}-R^6-\overset{\overset{O}{\|}}{C}-O-R^3-S-$;

$R^3$, $R^4$, $R^5$, $R^6$, $R^7$ and $R^8$ are as previously defined;

m' = 1 or 2, t' = 0 or 1 with the proviso that m' + t' = 2;

n and n' are as previously defined, p' = 0, 1 or 2 with the proviso that n + n' = 1, 2 or 3 and n + n' + p' = 3;

c' = 0 or 1, d' = 1 or 2, q' is 0 or an integer from 1 to 4 inclusive, g' = 0 or 1 and h' = 1 or 2 with the proviso that c' + d' = 2 and g' + h' = 2; and

w' = 0, 1 or 2, x' = 0 or 1, y' = 1 or 2 and z' = 0 or 1 with the proviso that when x' = 0 then y' + z' = 2, when x' = 1 then y' = 1, z' = 0 and w' = 1, when w' = 2 then x' = 0, and when w' = 0 then x' = 0, y' + z' = 2

and Y is $-W-R^3-W^1-$ or $-S-R^4-\overset{\overset{O}{\|}}{C}-O-$.

In another embodiment of this invention, the stabilizer compositions comprise : 1) a hydroxythio tin compound, or mixture of hydroxythio tin compounds selected from compounds having formulae III and/or IV where

Y is $-S-\underset{R^{24}}{\underset{|}{C}H}(\underset{R^{24}}{\underset{|}{C}H})_i O-\overset{O}{\overset{\|}{C}}(CH)_i$, $R^{24}$ is $-\overset{O}{\overset{\|}{C}}-O-R^{16}$, $-O-\overset{O}{\overset{\|}{C}}-R^{16}$, -OH, -SH, aryl, C1 to C18 alkyl or hydrogen and at least one $R^{24}$ is $-\overset{O}{\overset{\|}{C}}-O-R^{16}$ or $-O-\overset{O}{\overset{\|}{C}}-R^{16}$; $R^{16}$ is -H, and w = 1 or 2;

2) a mercaptan-containing organic compound or mixture of mercaptan-containing organic compounds selected from compounds having formula V wherein $R^{15}$ is $-\overset{O}{\overset{\|}{C}}-O-R^{116}$, $R^{124}$ is $-\overset{O}{\overset{\|}{C}}-O-R^{116}$ or $-O-\overset{O}{\overset{\|}{C}}-R^{116}$, and $R^{116}$ is $-R^8$; formula VI wherein when $R^{23}$ is $-\overset{O}{\overset{\|}{C}}-O-R^{116}$ or $-O-\overset{O}{\overset{\|}{C}}-R^{116}$, then $R^{116}$ is $-R^8$; and/or formulas VII, VIII, IX and/or X; and, optionally, an organotin compound or mixture of organotin compounds selected from compounds having formulae XI, XII, XIIa, XIII, XIV and/or XV. Thus, the stabilizer compositions of this embodiment comprise:

A. a hydroxythio tin compound or mixture of hydroxythio tin compounds selected from compounds having the formulae:

(III) 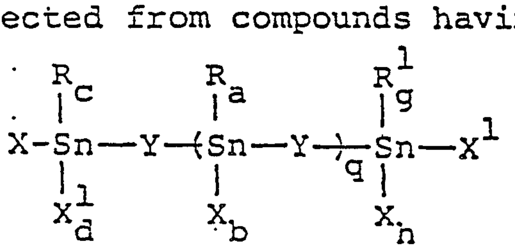 , and

(IV) 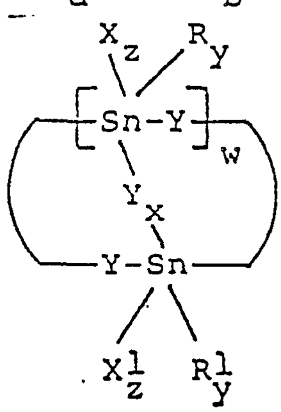 wherein

X and $X^1$ are the same or different and are selected from

$-SR^2$, Cl, Br, I, $-O-\overset{O}{\overset{\|}{C}}-R^8$, and $O-R^8$;

Y is $-S-\underset{R^{24}}{\underset{|}{CH}}-\!\!\left(\underset{R^{24}}{\underset{|}{CH}}\right)_i\!\!-O-\overset{O}{\overset{\|}{C}}\!\!\left(\underset{R^{24}}{\underset{|}{CH}}\right)_i$;

R and $R^1$ are the same or different and are selected from alkyl, aryl, alkenyl, aralkyl, alkaryl, cycloalkyl, cycloalkenyl, $-R^9-\overset{O}{\overset{\|}{C}}-R^8$, $-R^9-\overset{O}{\overset{\|}{C}}-O-R^{12}$, $-R^9-O-\overset{O}{\overset{\|}{C}}-R^8$, $-\underset{\underset{R^{21}}{\underset{|}{O=C}}}{\underset{|}{CH}}-\overset{O}{\overset{\|}{C}}-R^{13}$, $-R^9-O-R^{12}$, $-R^9-CN$;

$R^2$ is alkyl, alkenyl, aryl, hydroxy-substituted aryl, aralkyl, cycloalkyl, cycloalkenyl, $-R^4-\overset{O}{\overset{\|}{C}}-O-R^7$, $-R^3-O-\overset{O}{\overset{\|}{C}}-R^8$, $-R^4-O-\overset{O}{\overset{\|}{C}}-R^4-\overset{O}{\overset{\|}{C}}-O-R^8$, $-R^4-\overset{O}{\overset{\|}{C}}-O-R^3-O-\overset{O}{\overset{\|}{C}}-R^8$, $-R^3-S-R^7$, $-R^3-O-R^8$ or $-R^3OH$;

$R^3$ is alkylene of at least 2 carbon atoms, arylene, alkenylene of at least 2 carbon atoms, cycloalkylene, or cycloalkenylene;

$R^4$ is alkylene, arylene, alkenylene of at least 2 carbon atoms, cycloalkylene, or cycloalkenylene;

$R^7$ is -H or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is -H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy;

$R^{24}$ is $-\overset{O}{\overset{\|}{C}}-O-R^{16}$ or $-O-\overset{O}{\overset{\|}{C}}-R^{16}$; -OH, -SH, aryl, C1 to C18 alkyl or hydrogen, at least one $R^{24}$ being $-\overset{O}{\overset{\|}{C}}-R^{16}$, or $-O-\overset{O}{\overset{\|}{C}}-R^{16}$

$R^{16}$ is -H;

i = 0 or an integer from 1 to 6 inclusive;

a = 0,1 or 2, b = 0,1 or 2, c = 0, 1 or 2, d = 0, 1 or 2, g = 0, 1 or 2, h = 0, 1 or 2 and q = 0 or an integer from 1 to 4 inclusive with the proviso that a + b = 2, c + d = 2 and g + h = 2; and

w = 1 or 2, x = 0 or 1, y = 0 or 1 and z = 1 or 2 with the proviso that when x = 0 then y + z = 2, when x = 1 then y + z = 1 and w = 1, and when w = 2 then x = 0;

with the proviso that at least one X or $X^1$ in each of formulae (III)-(IV) is $-SR^2$ where $R^2$ is $-R^3OH$.

B. a mercaptan-containing organic compound or mixture of mercaptan-containing organic compounds selected from compounds having the formulae:

(V) 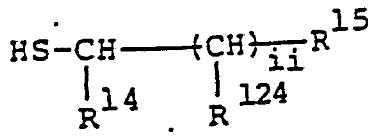 ,

(VI) 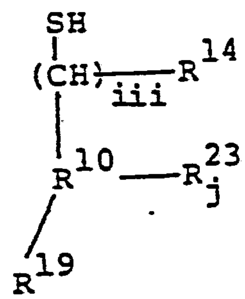 ,

(VII) 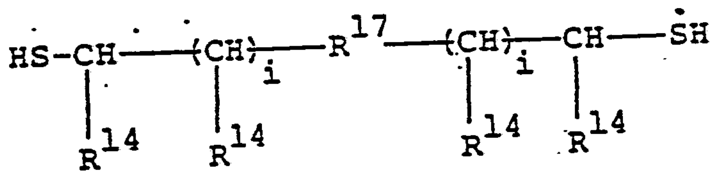 ,

(VIII) 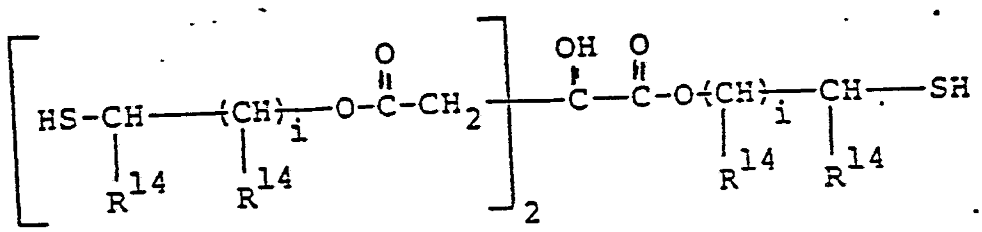 ,

(IX) 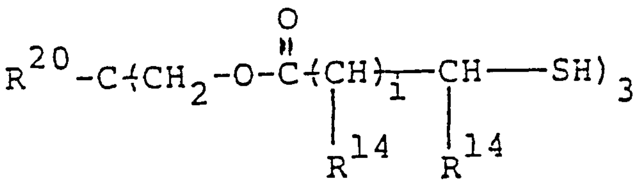 , and

(X) 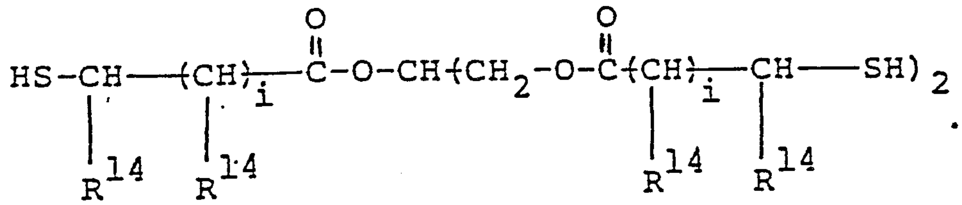 where

$R^{14}$ is -H, aryl or $C_1$ to $C_{18}$ alkyl;
i is as previously defined;

$R^{10}$ is cycloalkyl, cycloalkenyl or phenyl;

$R^{15}$ is $-\overset{O}{\overset{\|}{C}}-O-R^{116}$, $-O-\overset{O}{\overset{\|}{C}}-R^{116}$, -OH, -SH, aryl, $C_1$ to $C_{18}$ alkyl, or -H;

$R^{116}$ is $-R^8$;

$R^{17}$ is $-O-\overset{O}{\overset{\|}{C}}-R^{18}-\overset{O}{\overset{\|}{C}}-O-$ or $O-\overset{O}{\overset{\|}{C}}-CH=CH-\overset{O}{\overset{\|}{C}}-O-$;

$R^{18}$ is arylene, $C_1$ to $C_8$ alkylene, or 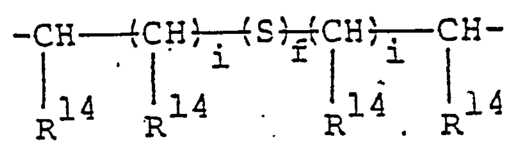 ;

$R^{19}$ is -H or a divalent group which may contain halogen, hydroxy, mercapto or alkyl substituents and which combines with $R^{10}$ when $R^{10}$ is phenyl to form a naphthalene ring;

$R^{20}$ is $-CH_3$, $-CH_2CH_3$, or 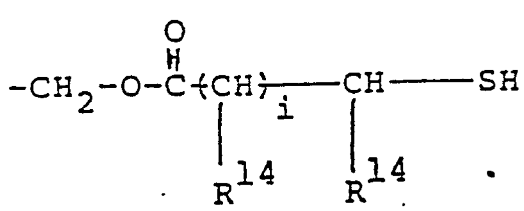 ;

$R^{23}$ is $-\overset{O}{\overset{\|}{C}}-O-R^{116}$, $-O-\overset{O}{\overset{\|}{C}}-R^{116}$, -SH, aryl, $C_1$ to $C_{18}$ alkyl, -OH or -H;

$R^{124}$ is $-\overset{O}{\overset{\|}{C}}-O-R^{116}$, $-O-\overset{O}{\overset{\|}{C}}-R^{116}$, -OH, -SH, aryl, $C_1$ to $C_{18}$ alkyl or -H;

ii = 0 or an integer from 1 to 6 inclusive;

iii = 0 or an integer from 1 to 6 inclusive;

j = 0, 1, 2 or 3; and

f = 1 or 2.; and, optionally,

C. an organotin compound or mixture of organotin compounds selected from compounds having the formulae:

(XI) 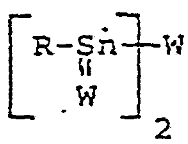 ,

(XII) 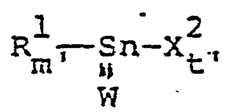 ,

(XIIa) 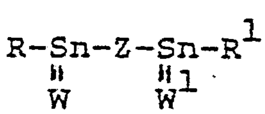

(XIII) 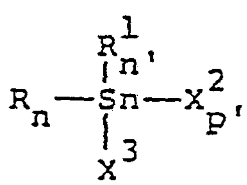

(XIV) 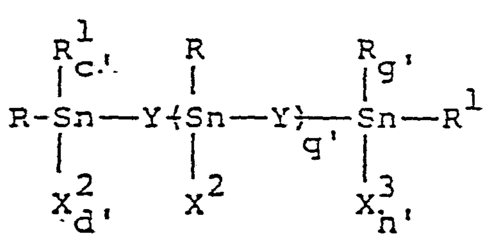 and

(XV) 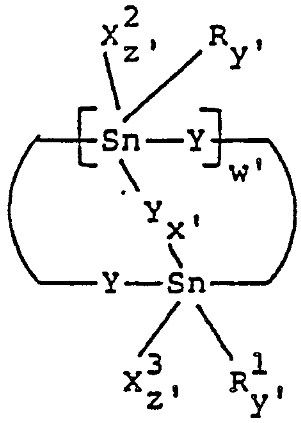 wherein

R, W and $R^1$, are as previously defined;

Y is $-(S)_v-$, $-W-R^3-W^1-$, $-S-R^4-\overset{O}{\overset{\|}{C}}-O$, $S-R^4-\overset{O}{\overset{\|}{C}}-O-R^5-O-\overset{O}{\overset{\|}{C}}-R^4-S-$,

$-S-R^3-O-\overset{O}{\overset{\|}{C}}-R^4-S-$, $-S-R^3-O-\overset{O}{\overset{\|}{C}}-R^6-\overset{O}{\overset{\|}{C}}-O-R^3-S-$, $-O-\overset{O}{\overset{\|}{C}}-R^6-\overset{O}{\overset{\|}{C}}-O-$,

$-O-\overset{O}{\overset{\|}{C}}-R^6-\overset{O}{\overset{\|}{C}}-O-R^5-O-\overset{O}{\overset{\|}{C}}-R^6-\overset{O}{\overset{\|}{C}}-O$, or $-S-\underset{R^{24}}{\underset{|}{CH}}-(\underset{R^{24}}{\underset{|}{CH}})_i-O-\overset{O}{\overset{\|}{C}}(\underset{R^{24}}{\underset{|}{CH}})_i$ ;

$X^2$ and $X^3$ are the same or different and are selected from $-SR^{25}$, Cl, Br, I, $-O-\overset{O}{\overset{\|}{C}}-R^8$ and $-O-R^8$ with the proviso that in formula (XV) where z' = 1 and in formulae (XIII) and (XIV) at least one $X^2$ or $X^3$ is $-SR^{25}$;

$R^{25}$ is alkyl, alkenyl, aryl, aralkyl,

cycloalkyl, cycloalkenyl, $-R^4-\overset{O}{\overset{\|}{C}}-O-R^7$, $-R^3-O-\overset{O}{\overset{\|}{C}}-R^8$,

$-R^4-O-\overset{O}{\overset{\|}{C}}-R^4-\overset{O}{\overset{\|}{C}}-O-R^8$, $-R^4-\overset{O}{\overset{\|}{C}}-O-R^3-O-\overset{O}{\overset{\|}{C}}-R^8$, $-R^3-S-R^7$ or $-R^3-O-R^8$;

Z is $-S-R^4-\overset{O}{\overset{\|}{C}}-O-R^5-O-\overset{O}{\overset{\|}{C}}-R^4-S-$, $-S-R^3-O-\overset{O}{\overset{\|}{C}}-R^4-S-$,

$-S-R^3-O-\overset{O}{\overset{\|}{C}}-R^6-\overset{O}{\overset{\|}{C}}-O-R^3-S-$;

$R^3$, $R^4$, $R^5$, $R^6$, $R^7$ and $R^8$ are as previously defined;

m' = 1 or 2, t' = 0 or 1 with the proviso that m' + t' = 2;

n and n' are as previously defined, p' = 0, 1 or 2 with the proviso that n + n' = 1, 2 or 3 and n + n' + p' = 3;

$c' = 0$ or 1, $d' = 1$ or 2, $q'$ is 0 or an integer from 1 to 4 inclusive, $g' = 0$ or 1 and $h' = 1$ or 2 with the proviso that $c' + d' = 2$ and $g' + h' = 2$; and

$w' = 0$, 1 or 2, $x' = 0$ or 1, $y' = 1$ or 2 and $z' = 0$ or 1 with the proviso that when $x' = 0$ then $y' + z' = 2$, when $x' = 1$ then $y' = 1$, $z' = 0$ and $w' = 1$, when $w' = 2$ then $x' = 0$, and when $w' = 0$ then $x' = 0$, $y' + z' = 2$

and Y is $-W-R^3-W^1-$ or $-S-R^4-\overset{O}{\overset{\|}{C}}-O-$.

In a further embodiment, this invention provides stabilizer compositions comprising: 1) a hydroxythio tin compound or mixture of hydroxythio tin compounds selected from compounds having formulae I, II, III and/or IV; 2) a mercaptan-containing organic compound or mixture of mercaptan-containing organic compounds selected from compounds according to formula V where $R^{15}$ is $-\overset{O}{\overset{\|}{C}}-O-R^{116}$ or $-O-\overset{O}{\overset{\|}{C}}-R^{116}$ and $R^{116}$ is -H; formula Va; formula VI where $R^{23}$ is $-\overset{O}{\overset{\|}{C}}-O-R^{116}$ or $-O-\overset{O}{\overset{\|}{C}}-R^{116}$ and $R^{116}$ is -H; and/or formula VIIa; and, optionally, 3) an organotin compound or mixture of organotin compounds selected from compounds having formulae XI, XII, XIIa, XIII, XIV and/or XV. Thus, the stabilizer compositions of this embodiment comprise:

A. a hydroxythio tin compound or mixture of hydroxythio tin compounds selected from compounds having the formulae:

(I) $R^1_m-\underset{\underset{W}{\|}}{Sn}-X_t$ ,

(II) 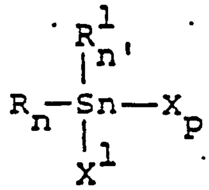 ,

(III) 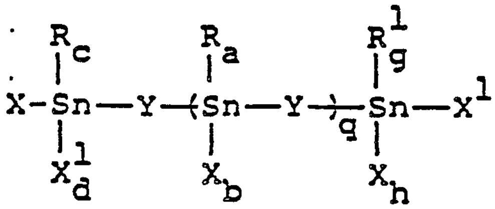 , and

(IV) 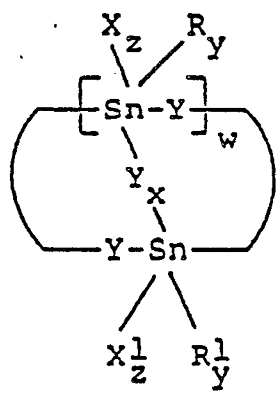 wherein

X and $X^1$ are the same or different and are selected from

$-SR^2$, Cl, Br, I, $-O-\overset{O}{\overset{\|}{C}}-R^8$, and $O-R^8$;

Y is $-(S)_v-$, $-W-R^3-W^1-$, $-S-R^4-\overset{O}{\overset{\|}{C}}-O$, $S-R^4-\overset{O}{\overset{\|}{C}}-O-R^5-O-\overset{O}{\overset{\|}{C}}-R^4-S-$,

$-S-R^3-O-\overset{O}{\overset{\|}{C}}-R^4-S-$, $-S-R^3-O-\overset{O}{\overset{\|}{C}}-R^6-\overset{O}{\overset{\|}{C}}-O-R^3-S-$, $-O-\overset{O}{\overset{\|}{C}}-R^6-\overset{O}{\overset{\|}{C}}-O-$,

$-O-\overset{O}{\overset{\|}{C}}-R^6-\overset{O}{\overset{\|}{C}}-O-R^5-O-\overset{O}{\overset{\|}{C}}-R^6-\overset{O}{\overset{\|}{C}}-O$, or $-S-\underset{R^{24}}{\underset{|}{CH}}-(\underset{R^{24}}{\underset{|}{CH}})_i-O-\overset{O}{\overset{\|}{C}}-(\underset{R^{24}}{\underset{|}{CH}})_i$ ;

W and $W^1$ are the same or different and are oxygen or sulfur;

R and $R^1$ are the same or different and are selected from alkyl, aryl, alkenyl, aralkyl, alkaryl, cycloalkyl, cycloalkenyl, $-R^9-\overset{O}{\overset{\|}{C}}-R^8$, $-R^9-\overset{O}{\overset{\|}{C}}-O-R^{12}$, $-R^9-O-\overset{O}{\overset{\|}{C}}-R^8$, $-\underset{\underset{\underset{R^{21}}{|}}{O=C}}{\underset{|}{CH}}-\overset{O}{\overset{\|}{C}}-R^{13}$, $-R^9-O-R^{12}$, $-R^9-CN$;

$R^2$ is alkyl, alkenyl, aryl, hydroxy-substituted aryl, aralkyl, cycloalkyl, cycloalkenyl, $-R^4-\overset{O}{\overset{\|}{C}}-O-R^7$, $-R^3-O-\overset{O}{\overset{\|}{C}}-R^8$, $-R^4-O-\overset{O}{\overset{\|}{C}}-R^4-\overset{O}{\overset{\|}{C}}-O-R^8$, $-R^4-\overset{O}{\overset{\|}{C}}-O-R^3-O-\overset{O}{\overset{\|}{C}}-R^8$, $-R^3-S-R^7$, $-R^3-O-R^8$ or $-R^3OH$;

$R^3$ is alkylene of at least 2 carbon atoms, arylene, alkenylene of at least 2 carbon atoms, cycloalkylene, or cycloalkenylene;

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^7$ is -H or $R^8$;

$R^8$ is alkyl, alkenyl, aryl, aralkyl. alkaryl, cycloalkyl, or cycloalkenyl;

$R^9$ is $C_1$ to $C_4$ alkylene;

$R^{12}$ is -H or a monovalent $C_1$ to $C_{20}$ hydrocarbon radical;

$R^{13}$ and $R^{21}$ are the same or d..fferent and are each $C_1$ to $C_{20}$ alkyl or $C_1$ to $C_{20}$ alkoxy;

$R^{24}$ is $-\overset{O}{\overset{\|}{C}}-O-R^{16}$, $-O-\overset{O}{\overset{\|}{C}}-R^{16}$, -OH, -SH, aryl, $C_1$ to $C_{18}$ alkyl or -H;

$R^{16}$ is -H or $R^8$;

i = 0 or an integer from 1 to 6 inclusive;

m = 0 or 1, t = 1 or 2 with the proviso that m + t = 2;

n = 0, 1, 2 or 3, n' = 0, 1, 2 or 3, p = 0, 1, 2 or 3 with the proviso that n + n' + p = 3;

a = 0,1 or 2, b = 0,1 or 2, c = 0, 1 or 2, d = 0, 1 or 2, g = 0, 1 or 2, h = 0, 1 or 2 and q = 0 or an integer from 1 to 4 inclusive with the proviso that a + b = 2, c + d = 2 and g + h = 2;

v = an integer from 1 to 8 inclusive; and

w = 0, 1 or 2, x = 0 or 1, y = 0 or 1 and z = 1 or 2 with the proviso that when x = 0 then y + z = 2, when x = 1 then y + z = 1 and w = 1, when w = 2 then x = 0, and when w = 0 then x = 0, y + z = 2 and Y is $-W-R^3-W^1-$ or

$-S-R^4-\overset{O}{\overset{\|}{C}}-O-$;

with the proviso that at least one X or $X^1$ in each of formulae (I)-(IV) is $-SR^2$ where $R^2$ is $-R^3OH$; and

B. a mercaptan-containing organic compound or mixture of mercaptan-containing organic compounds selected from compounds having the formulae:

(V) 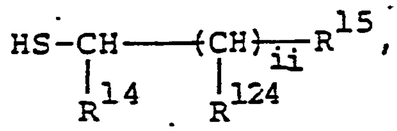

(Va) $HSCH_2\overset{O}{\overset{\|}{C}}OH$,

(VI) 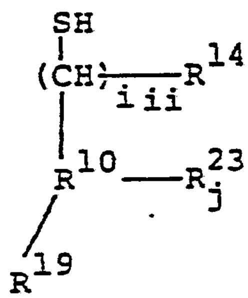 , and

(VIIa) $HS-R^{200}-O-\overset{O}{\overset{\|}{C}}-R^{201}-SH$, where

$R^{14}$ is -H, aryl or $C_1$ to $C_{18}$ alkyl;

$R^{10}$ is cycloalkyl, cycloalkenyl or phenyl;

$R^{15}$ is $-\overset{O}{\overset{\|}{C}}-O-R^{116}$, $-O-\overset{O}{\overset{\|}{C}}-R^{116}$;

$R^{124}$ is $-\overset{O}{\overset{\|}{C}}-O-R^{116}$, $-O-\overset{O}{\overset{\|}{C}}-R^{116}$, -OH, -SH, aryl, $C_1$ to $C_{18}$ alkyl or -H;

$R^{19}$ is -H or a divalent group which may contain halogen, hydroxy, mercapto or alkyl substituents and which combines with $R^{10}$ when $R^{10}$ is phenyl to form a naphthalene ring;

$R^{23}$ is $-\overset{O}{\overset{\|}{C}}-O-R^{116}$ or $-O-\overset{O}{\overset{\|}{C}}-R^{116}$;

$R^{116}$ is -H;

$R^{200}$ and $R^{201}$ are the same or different and are alkylene, alkenylene, arylene, cycloalkylene or cycloalkenylene; or alkylene, alkenylene, arylene, cycloalkylene or cycloalkenylene each substituted with one or two $-R$, $-O-R^7$, $-R^9-O-R^7$, $-O-\overset{O}{\overset{\|}{C}}-R^8$ or $-O-\overset{O}{\overset{\|}{C}}-R^4-\overset{O}{\overset{\|}{C}}-O-R^8$ groups; R, $R^7$, $R^8$, $R^4$ and $R^9$ are as previously defined;

ii = 0 or an integer from 1 to 6 inclusive, with the proviso that when $R^{15}$ is $-\overset{O}{\overset{\|}{C}}-O-R^{116}$ where $R^{116}$ is -H, then ii = an integer from 1 to 6 inclusive;

iii = 0 or an integer from 1 to 6 inclusive, with the proviso that when $R^{23}$ is $-\overset{O}{\overset{\|}{C}}-O-R^{116}$ where $R^{116}$ is -H, and $R^{23}$ is bonded to the same ring carbon atom as the $-(\underset{R^{14}}{\underset{|}{CH}})_{iii}-SH$ group, then iii = an integer from 1 to 6 inclusive.

j = 0, 1, 2 or 3; and

f = 1 or 2; and, optionally,

C. an organotin compound or mixture of organotin compounds selected from compounds having the formulae:

(XI) 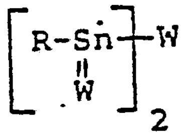 ,

(XII) 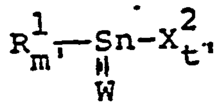 ,

(XIIa) 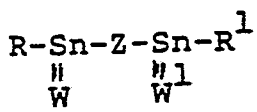

(XIII) 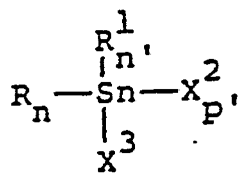

(XIV) 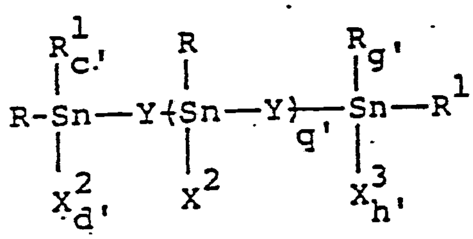 and

(XV) 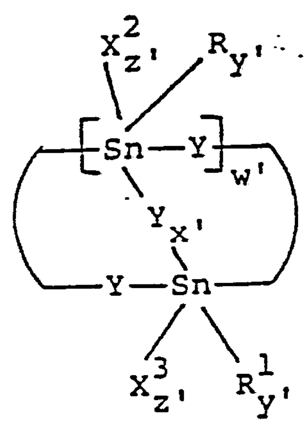 wherein

R, W, $R^1$, and Y are as previously defined;

$X^2$ and $X^3$ are the same or different and are selected from

$-SR^{25}$, Cl, Br, I, $-O-\overset{\overset{O}{\|}}{C}-R^8$ and $-O-R^8$ with the proviso that in formula (XV) where z' = 1 and in formulae (XIII) and (XIV) at least one $X^2$ or $X^3$ is $-SR^{25}$;

$R^{25}$ is alkyl, alkenyl, aryl, aralkyl,

cycloalkyl, cycloalkenyl, $-R^4-\overset{\overset{O}{\|}}{C}-O-R^7$, $-R^3-O-\overset{\overset{O}{\|}}{C}-R^8$,

$-R^4-O-\overset{\overset{O}{\|}}{C}-R^4-\overset{\overset{O}{\|}}{C}-O-R^8$, $-R^4-\overset{\overset{O}{\|}}{C}-O-R^3-O-\overset{\overset{O}{\|}}{C}-R^8$, $-R^3-S-R^7$ or $-R^3-O-R^8$;

Z is $-S-R^4-\overset{\overset{O}{\|}}{C}-O-R^5-O-\overset{\overset{O}{\|}}{C}-R^4-S-$, $-S-R^3-O-\overset{\overset{O}{\|}}{C}-R^4-S-$, or

$-S-R^3-O-\overset{\overset{O}{\|}}{C}-R^6-\overset{\overset{O}{\|}}{C}-O-R^3-S-$;

$R^3$, $R^4$, $R^5$, $R^6$, $R^7$ and $R^8$ are as previously defined;

m' = 1 or 2, t' = 0 or 1 with the proviso that m' + t' = 2;

n = 0, 1, 2 or 3, n' = 0, 1, 2 or 3, p' = 0, 1 or 2 with the proviso that n + n' = 1, 2 or 3 and n + n' + p' = 3;

c' = 0 or 1, d' = 1 or 2, q' is 0 or an integer from 1 to 4 inclusive, g' = 0 or 1 and h' = 1 or 2 with the proviso that c' + d' = 2 and g' + h' = 2; and

w' = 0, 1 or 2, x' = 0 or 1, y' = 1 or 2 and z' = 0 or 1 with the proviso that when x' = 0 then y' + z' = 2, when x' = 1 then y' = 1, z' = 0 and w' = 1, when w' = 2 then x' = 0, and when w' = 0 then x' = 0, y' + z' = 2

and Y is $-W-R^3-W^1-$ or $-S-R^4-\overset{\overset{O}{\|}}{C}-O-$; and

In another embodiment of this invention, the stabilizer compositions comprise: 1) a hydroxythio tin compound or mixture of hydroxythio tin compounds selected from compounds having formulae I, II, III, and/or IV where, in formulae III and IV, when

Y is $-S-\underset{R^{24}}{CH}-(\underset{R^{24}}{CH})_i-O-\overset{O}{\overset{\|}{C}}-(\underset{R^{24}}{CH})_i-$ and $R^{24}$ is $-\overset{O}{\overset{\|}{C}}-O-R^{16}$ or $-O-\overset{O}{\overset{\|}{C}}-R^{16}$

then $R^{16}$ is $R^8$; 2) a mercaptan-containing organic compounds or mixture of mercaptan-containing organic compounds selected from compounds having formula V wherein when $R^{15}$ is $-\overset{O}{\overset{\|}{C}}-O-R^{16}$ or $-O-\overset{O}{\overset{\|}{C}}-R^{16}$, then $R^{16}$ is $-R^8$; formula VI wherein when $R^{23}$ is $-\overset{O}{\overset{\|}{C}}-O-R^{16}$ or $-O-\overset{O}{\overset{\|}{C}}-R^{16}$, then $R^{16}$ is $-R^8$; and/or formula VII, VIII, IX and/or X; and 3) an organotin compound or mixture of organotin compounds selected from compounds having formula XIIa. Thus, the stabilizer compositions of this embodiment comprise:

A. a hydroxythio tin compound or mixture of hydroxythio tin compounds selected from compounds having the formulae:

(I) 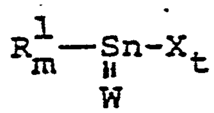 ,

(II) 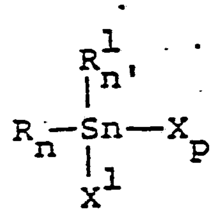 ,

(III) 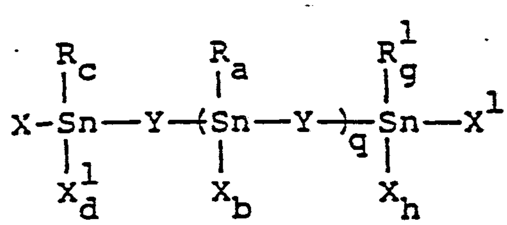 , and

(IV) 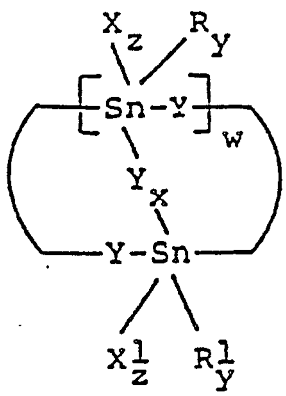 wherein

X and $X^1$ are the same or different and are selected from

$-SR^2$, Cl, Br, I, $-O-\overset{O}{\overset{\|}{C}}-R^8$, and $O-R^8$;

Y is $-(S)_v-$, $-W-R^3-W^1-$, $-S-R^4-\overset{O}{\overset{\|}{C}}-O$, $S-R^4-\overset{O}{\overset{\|}{C}}-O-R^5-O-\overset{O}{\overset{\|}{C}}-R^4-S-$,

$-S-R^3-O-\overset{O}{\overset{\|}{C}}-R^4-S-$, $-S-R^3-O-\overset{O}{\overset{\|}{C}}-R^6-\overset{O}{\overset{\|}{C}}-O-R^3-S-$, $-O-\overset{O}{\overset{\|}{C}}-R^6-\overset{O}{\overset{\|}{C}}-O-$,

$-O-\overset{O}{\overset{\|}{C}}-R^6-\overset{O}{\overset{\|}{C}}-O-R^5-O-\overset{O}{\overset{\|}{C}}-R^6-\overset{O}{\overset{\|}{C}}-O$, or $-S-\underset{R^{24}}{\underset{|}{CH}}-(\underset{R^{24}}{\underset{|}{CH}})_i-O-\overset{O}{\overset{\|}{C}}-(\underset{R^{24}}{\underset{|}{CH}})_i$;

W and $W^1$ are the same or different and are oxygen or sulfur;

R and $R^1$ are the same or different and are selected from alkyl, aryl, alkenyl, aralkyl, alkaryl, cycloalkyl, cycloalkenyl,

$-R^9-\overset{O}{\overset{\|}{C}}-R^8$, $-R^9-\overset{O}{\overset{\|}{C}}-O-R^{12}$, $-R^9-O-\overset{O}{\overset{\|}{C}}-R^8$, $-\underset{O=\underset{R^{21}}{\underset{|}{C}}}{\underset{|}{CH}}-\overset{O}{\overset{\|}{C}}-R^{13}$,

$-R^9-O-R^{12}$, $-R^9-CN$;

$R^2$ is alkyl, alkenyl, aryl, hydroxy-substituted aryl, aralkyl, cycloalkyl, cycloalkenyl, $-R^4-\overset{O}{\overset{\|}{C}}-O-R^7$, $-R^3-O-\overset{O}{\overset{\|}{C}}-R^8$,

$-R^4-O-\overset{O}{\overset{\|}{C}}-R^4-\overset{O}{\overset{\|}{C}}-O-R^8$, $-R^4-\overset{O}{\overset{\|}{C}}-O-R^3-O-\overset{O}{\overset{\|}{C}}-R^8$, $-R^3-S-R^7$,

$-R^3-O-R^8$ or $-R^3OH$;

$R^3$ is alkylene of at least 2 carbon atoms, arylene, alkenylene of at least 2 carbon atoms, cycloalkylene, or cycloalkenylene;

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^7$ is -H or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is -H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy;

$R^{24}$ is $-\overset{O}{\overset{\|}{C}}-O-R^{16}$, $-O-\overset{O}{\overset{\|}{C}}-R^{16}$, -OH, -SH, aryl, $C_1$ to $C_{18}$ alkyl or -H;

$R^{16}$ is $R^8$;

i = 0 or an integer from 1 to 6 inclusive;

m = 0 or 1, t = 1 or 2 with the proviso that m + t = 2;

n = 0, 1, 2 or 3, n' = 0, 1, 2 or 3, p = 0, 1, 2 or 3 with the proviso that n + n' + p = 3;

a = 0,1 or 2, b = 0,1 or 2, c = 0, 1 or 2, d = 0, 1 or 2, g = 0, 1 or 2, h = 0, 1 or 2 and q = 0 or an integer from 1 to 4 inclusive with the proviso that a + b = 2, c + d = 2 and g + h = 2;

v = an integer from 1 to 8 inclusive; and

w = 0, 1 or 2, x = 0 or 1, y = 0 or 1 and z = 1 or 2 with the proviso that when x = 0 then y + z = 2, when x = 1 then y + z = 1 and w = 1, when w = 2 then x = 0, and when w = 0 then x = 0, y + z = 2 and Y is $-W-R^3-W^1-$ or

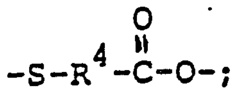

with the proviso that at least one X or $X^1$ in each of formulae (I)-(IV) is $-SR^2$ where $R^2$ is $-R^3OH$; and

B. a mercaptan-containing organic compound or mixture of mercaptan-containing organic compounds selected from compounds having the formulae:

(V) 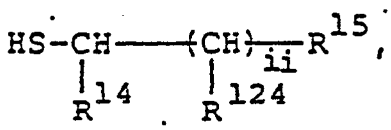

(VI) 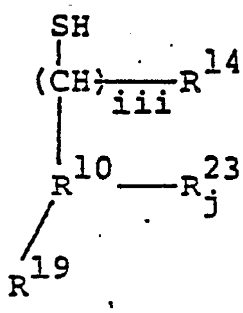

(VII) 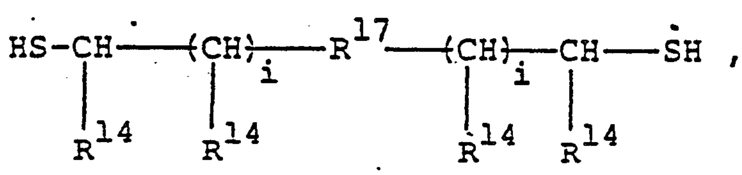

(VIII) 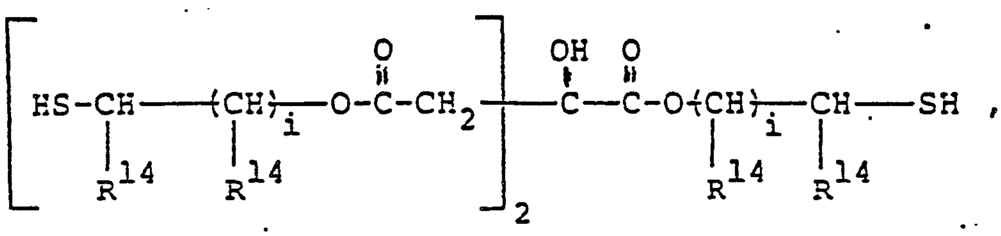

(IX) $R^{20}-C\!\left(CH_2-O-\overset{O}{\overset{\|}{C}}\!\left(\underset{R^{14}}{\underset{|}{CH}}\right)_i-\underset{R^{14}}{\underset{|}{CH}}-SH\right)_3$, and

(X) $HS-\underset{R^{14}}{\underset{|}{CH}}-\left(\underset{R^{14}}{\underset{|}{CH}}\right)_i-\overset{O}{\overset{\|}{C}}-O-CH\!\left(CH_2-O-\overset{O}{\overset{\|}{C}}\!\left(\underset{R^{14}}{\underset{|}{CH}}\right)_i-\underset{R^{14}}{\underset{|}{CH}}-SH\right)_2$

where

$R^{14}$ is -H, aryl or $C_1$ to $C_{18}$ alkyl;

i is as previously defined;

$R^{10}$ is cycloalkyl, cycloalkenyl or phenyl;

$R^{15}$ is $-\overset{O}{\overset{\|}{C}}-O-R^{116}$, $-O-\overset{O}{\overset{\|}{C}}-R^{116}$, -OH, -SH, aryl, $C_1$ to $C_{18}$ alkyl, or -H;

$R^{116}$ is $-R^8$;

$R^{17}$ is $-O-\overset{O}{\overset{\|}{C}}-R^{18}-\overset{O}{\overset{\|}{C}}-O-$ or $O-\overset{O}{\overset{\|}{C}}-CH=CH-\overset{O}{\overset{\|}{C}}-O-$;

$R^{18}$ is arylene, $C_1$ to $C_8$ alkylene, or $-\underset{R^{14}}{\underset{|}{CH}}-\left(\underset{R^{14}}{\underset{|}{CH}}\right)_i-(S)_f-\left(\underset{R^{14}}{\underset{|}{CH}}\right)_i-\underset{R^{14}}{\underset{|}{CH}}-$;

$R^{19}$ is -H or a divalent group which may contain halogen, hydroxy, mercapto or alkyl substituents and which combines with $R^{10}$ when $R^{10}$ is phenyl to form a naphthalene ring;

$R^{20}$ is $-CH_3$, $-CH_2CH_3$, or $-CH_2-O-\overset{O}{\overset{\|}{C}}\!\left(\underset{R^{14}}{\underset{|}{CH}}\right)_i-\underset{R^{14}}{\underset{|}{CH}}-SH$;

$R^{23}$ is $-C(=O)-O-R^{116}$, $-O-C(=O)-R^{116}$, -SH, aryl, $C_1$ to $C_{18}$ alkyl, -OH or -H

$R^{124}$ is $-C(=O)-O-R^{116}$, $-O-C(=O)-R^{116}$, -OH, -SH, aryl, $C_1$ to $C_{18}$ alkyl or -H;

ii = 0 or an integer from 1 to 6 inclusive;

iii = 0 or an integer from 1 to 6 inclusive;

j = 0, 1, 2 or 3; and

f = 1 or 2.; and, optionally,

C. an organotin compound or mixture of organotin compounds selected from compounds having the formulae:

(XIIa) $R-Sn(=W)-Z-Sn(=W^1)-R^1$ where

W and $W^1$ are the same or different and are oxygen or sulfur;

Z is $-S-R^4-C(=O)-O-R^5-O-C(=O)-R^4-S-$, $-S-R^3-O-C(=O)-R^4-S-$,

$-S-R^3-O-C(=O)-R^6-C(=O)-O-R^3-S-$;

R and $R^1$ are the same or different and are selected from alkyl, aryl, alkenyl, aralkyl, alkaryl, cycloalkyl, cycloalkenyl,

$-R^9-C(=O)-R^8$, $-R^9-C(=O)-O-R^{12}$, $-R^9-O-C(=O)-R^8$, $-CH(C(=O)R^{21})-C(=O)-R^{13}$,

$-R^9-O-R^{12}$, $-R^9-CN$;

$R^3$ is alkylene of at least 2 carbon atoms, arylene, alkenylene of at least 2 carbon atoms, cycloalkylene, or cyclo-alkenylene;

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is -H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy;

The stabilizer compositions of this invention may be prepared by blending the components thereof in any convenient manner which produces a homogeneous mixture, such as by shaking or stirring in a container. Likewise, the stabilizer compositions of this invention can be incorporated into the halogen-containing organic polymer by admixing the stabilizer composition and polymer, such as, for example, in an appropriate mill or mixer or by any other of the well-known methods which provide uniform distribution of the stabilizer throughout the polymer.

As previously stated, the stabilizer compositions of the present invention comprise 1) a hydroxythio tin compound or mixture of hydroxythio tin compounds, 2) a mercaptan-containing organic compound or mixture of mercaptan-containing organic compounds, and, optionally, 3) an organotin compound or mixture of organotin compounds. More particularly, the stabilizer compositions of this invention contain about 10% to about 60%, preferably about 20% to about 40% by weight based on the total weight of the stabilizer composition of

mercaptan-containing organic compound or mixture of mercaptan-containing organic compounds, the balance of the stabilizer composition being comprised of hydroxythio tin compound or mixture of hydroxythio tin compounds, and, optionally, organotin compound or mixture of organotin compounds. It should be emphasized that the hydroxythio tin compounds and optional organo tin compounds are employed in the practice of this invention in amounts such that 1-100%, preferably 3-50%, and most preferably 5-20% of the bonds from the tin atoms in the hydroxythio tin compounds and, when utilized, organotin compounds to atoms other than carbon are to $-S-R^3-OH$ groups.

The stabilizer compositions of this invention are employed in an amount sufficient to impart the desired resistance to heat deterioration to halogen-containing organic polymers. It will be readily apparent to one of ordinary skill in the art, that the precise amount of stabilizer composition used will depend upon several factors, including, but not limited to, the particular halogen-containing organic polymer employed, the temperature to which the polymer will be subjected, and the possible presence of other stabilizing compounds. In general, the more severe the conditions to which the halogen-containing organic polymer is subjected, and the longer the term required for resisting degradation, the greater will be the amount of stabilizer composition required. Generally, as little as about 0.40 parts by weight of the stabilizer composition per hundred parts by weight of halogen-containing organic polymer will be stabilizingly effective. While there is no critical upper limit to the amount of stabilizer composition which can be employed, amounts in excess of about 10 parts by weight of stabilizer composition per hundred parts by weight of halogen-containing organic polymer do not give an increase in effectiveness commensurate with the additional amount of stabilizer employed.

The stabilized halogen-containing organic polymer compositions of this invention may be used to form articles of manufacture, e.g. pipe. A variety of conventional molding techniques may be employed to form the stabilized compositions into any desired shape.

The following examples illustrate this invention. Unless otherwise indicated, all parts and percentages in the examples and throughout this specification are by weight.

## EXAMPLES 1-10

Several mixtures are prepared by dry blending to 110°C in a Henschel high intensity mixer (Model 2JSS ) 100.0 parts of polyvinyl chloride (Geon 103EP-F-76 available commercially from B. F. Goodrich Chemical Company) with 3.0 parts of fine particle size calcium carbonate coated with calcium stearate, 1.0 part titanium dioxide, 1.2 parts paraffin wax (ADVAWAX® 165 paraffin wax available commercially from Carstab Corporation), 0.60 part calcium stearate, 0.15 part of an oxidized low molecular weight ethylene homopolymer (AC629A available commercially from Allied Chemical Corporation), and each in turn of the stabilizer compositions listed in Table A in the amounts indicated in Table A, said amounts being parts by weight of stabilizer per hundred parts of polyvinyl chloride. The resulting mixture is masticated on a two-roll mill at about 193°C. Samples are taken at one minute intervals beginning after the first introduction of the mix to the mill.

The appearance of each sample taken from the mill is evaluated using the following scale:

| 10 | 9 | 8 | 7 | 6 | 5 | 4 | 3 | 2 | 1 | 0 |
|---|---|---|---|---|---|---|---|---|---|---|
| White → | | | | Tan-Orange → | | | | | | Burn |

The results of these tests are indicated in Table A.

TABLE A

| Example No. | Stabilizer Composition | Parts By Weight | Minutes of Milling 1 | 2 | 3 | 4 | 5 | 6 | 7 | 8 | 9 | 10 |
|---|---|---|---|---|---|---|---|---|---|---|---|---|
| | | | COLOR | | | | | | | | | |
| 1 | Hydroxythio tin cmpd. C from Table II | 0.02 | | | | | | | | | | |
| | $HSCH_2CH_2\overset{O}{\overset{\|}{C}}OC_8H_{17}$ | 0.08 | 10+ | 10+ | 10+ | 10+ | 9 | 8 | 7 | 6 | 4 | 2 |
| | Organotin cmpd. No. 3 from Table V | 0.40 | | | | | | | | | | |
| 2 | Hydroxythio tin cmpd. A from Table I | 0.005 | | | | | | | | | | |
| | $HSCH_2\overset{O}{\overset{\|}{C}}OC_8H_{17}$ | 0.10 | 10+ | 10+ | 10 | 10 | 8 | 8 | 7 | 5 | 4 | 2 |
| | Organotin cmpd. No. 3 from Table V | 0.40 | | | | | | | | | | |
| 3 | Hydroxythio tin cmpd. H from Table II | 0.005 | | | | | | | | | | |
| | $HSCH_2\overset{O}{\overset{\|}{C}}OCH_2CH_2O\overset{O}{\overset{\|}{C}}CH_2SH$ | 0.10 | 10+ | 10+ | 10+ | 10 | 9 | 7 | 7 | 7 | 5 | 4 |
| | Organotin cmpd. No. 9 from Table VI | 0.40 | | | | | | | | | | |
| 4 | Hydroxythio tin cmpd. I from Table II | 0.004 | | | | | | | | | | |
| | $HS\underset{C_{10}H_{21}}{\underset{\|}{CH}}\overset{O}{\overset{\|}{C}}OCH_3$ | 0.10 | 10+ | 10+ | 10+ | 10 | 9 | 8 | 7 | 5 | 4 | 2 |
| | Organotin cmpd. No. 12 from Table VII | 0.35 | | | | | | | | | | |

TABLE A (Continued)

| ple . | Stabilizer Composition | Parts By Weight | Minutes of Milling 1 | 2 | 3 | 4 | 5 | 6 | 7 | 8 | 9 | 10 |
|---|---|---|---|---|---|---|---|---|---|---|---|---|
| | | | COLOR | | | | | | | | | |
| | Hydroxythio tin cmpd. M from Table III | 0.06 | | | | | | | | | | |
| | $HSCH_2CH_2OH$ | 0.60 | 10+ | 10+ | 10+ | 10+ | 10 | 10 | 9 | 8 | 7 | 5 |
| | Organotin cmpd. No. 18 from Table VII | 0.40 | | | | | | | | | | |
| | Hydroxythio tin cmpd. N from Table III | 0.02 | | | | | | | | | | |
| | HS- 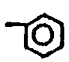 | 0.20 | 10+ | 10+ | 10 | 10 | 8 | 7 | 6 | 6 | 5 | 4 |
| | Organotin cmpd. No. 18 from Table VII | 0.02 | | | | | | | | | | |
| | Hydroxythio tin cmpd. R from Table III | 0.05 | | | | | | | | | | |
| | $HSC_{12}H_{25}$ | 0.10 | 10+ | 10+ | 10 | 9 | 8 | 7 | 6 | 5- | 4 | 2 |
| | Mixture of equal weight proportions of Organotin cmpd No. 19 from Table VII and Organotin cmpd No. 2 from Table V | 0.30 | | | | | | | | | | |

TABLE A (Continued)

| Example No. | Stabilizer Composition | Parts By Weight | Minutes of Milling 1 | 2 | 3 | 4 | 5 | 6 | 7 | 8 | 9 | 10 |
|---|---|---|---|---|---|---|---|---|---|---|---|---|
| | | | COLOR | | | | | | | | | |
| 8 | Hydroxythio tin cmpd. K from Table II | 0.01 | | | | | | | | | | |
| | 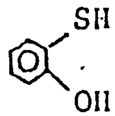 | 0.05 | 10+ | 10+ | 10+ | 10+ | 10 | 9 | 8 | 7 | 6 | 6 |
| | Mixture of Organotin cmpd 2 and 20 (1:1) | 0.20 | | | | | | | | | | |
| 9 | Hydroxythio tin cmpd. K from Table II | 0.02 | | | | | | | | | | |
| | 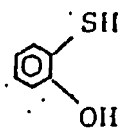 | 0.05 | 10+ | 10+ | 10+ | 10+ | 10 | 9+ | 9 | 8 | 6 | 5 |
| | Mixture of Organotin cmpd 2 and 20 (1:1) | 0.20 | | | | | | | | | | |
| 10 | Hydroxythio tin cmpd. J from Table II | 0.10 | | | | | | | | | | |
| | $HSCH_2CH_2O\overset{O}{\overset{\|}{C}}CH_3$ | 0.30 | 10+ | 10+ | 10+ | 10+ | 10 | 10 | 9 | 8 | 6 | 5 |
| | Organotin cmpd. No. 14 from Table VII | 0.35 | | | | | | | | | | |
| 11 | Hydroxythio tin cmpd. A from Table I | 0.30 | | | | | | | | | | |
| | $HSCH_2CH_2O\overset{O}{\overset{\|}{C}}C_{17}H_{33}$ | 0.10 | 10+ | 10+ | 10+ | 10 | 9 | 8 | 7 | 6 | 4 | 2 |

EXAMPLES 12-26

The stabilizer compositions indicated in Table B below are tested in the same manner and with substantially equivalent results as the stabilizer compositions of Examples 1-11.

TABLE B

| Example No. | Stabilizer Composition | Parts By Weight |
|---|---|---|
| 12 | Hydroxythio tin cmpd. D from Table II | 0.08 |
| | $HSCH_2CH_2\overset{O}{\overset{\|}{C}}OC_{18}H_{37}$ | 0.15 |
| | Organotin cmpd. No. 5 from Table V | 0.40 |
| 13 | Hydroxythio tin cmpd. F from Table II | 0.04 |
| | $HSCH_2CH_2\overset{O}{\overset{\|}{C}}OC_{18}H_{37}$ | 0.15 |
| | Organotin cmpd. No. 5 from Table V | 0.40 |
| 14 | Hydroxythio tin cmpd. B from Table I | 0.03 |
| | $HSCH_2CH_2O\overset{O}{\overset{\|}{C}}C_{17}H_{33}$ | 0.20 |
| | Organotin cmpd. No. 9 from Table VI | 0.40 |
| 15 | Hydroxythio tin cmpd. G from Table II | 0.18 |
| | $(HSCH_2CH_2O\overset{O}{\overset{\|}{C}}CH_2)_2\underset{OH}{C}-\overset{O}{\overset{\|}{C}}OCH_2CH_2SH$ | 0.40 |
| | Organotin cmpd. No. 9 from Table VI | 0.40 |
| 16 | Hydroxythio tin cmpd. P from Table III | 0.04 |
| | $HSCH_2\overset{O}{\overset{\|}{C}}OH$ | 0.04 |
| | Organotin cmpd. No. 14 from Table VII | 0.40 |

TABLE B (Continued)

| Example No. | Stabilizer Composition | Parts By Weight |
|---|---|---|
| 17 | Hydroxythio tin cmpd. E from Table II | 0.008 |
| | $HSCH_2CH_2OC(=O)CH=CHC(=O)OCH_2CH_2SH$ | 0.10 |
| | Organotin cmpd. No. 18 from Table VII | 0.40 |
| 18 | Hydroxythio tin cmpd. Q from Table III | 0.003 |
| | $HSCH(C_9H_{19})CH_2OH$ | 0.03 |
| | Mixture of Organotin cmpds. 1 and 11 (1:1) | 0.30 |
| 19 | Hydroxythio tin cmpd. L from Table II | 0.03 |
| | 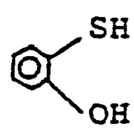 | 0.05 |
| | Mixture of Organotin cmpds. 2 and 20 (1:1) | 0.20 |

TABLE B (Continued)

| Example No. | Stabilizer Composition | Parts By Weight |
|---|---|---|
| 20 | Hydroxythio tin cmpd. SS from Table III | 0.40 |
| | $HSCH_2\overset{O}{\overset{\|}{C}}OC_8H_{17}$ | 0.10 |
| 21 | Hydroxythio tin cmpd. SS from Table III | 0.40 |
| | $HSCH_2\overset{O}{\overset{\|}{C}}OC_8H_{17}$ | 0.10 |
| | Organotin cmpd. No. 4 from Table V | 0.10 |
| 22 | Hydroxythio tin cmpd. C from Table II | 0.275 |
| | $HSCH_2CH_2\overset{O}{\overset{\|}{C}}OH$ | 0.005 |
| 23 | Hydroxythio tin cmpd. C from Table II | 0.275 |
| | $HSCH_2CH_2\overset{O}{\overset{\|}{C}}OH$ | 0.005 |
| | Organotin cmpd. No. 19 from Table VII | 0.15 |
| 24 | Hydroxythio tin cmpd. C from Table II | 0.275 |
| | $HSCH_2CH_2O\overset{O}{\overset{\|}{C}}CH_2SH$ | 0.125 |
| 25 | Hydroxythio tin cmpd. C from Table II | 0.275 |
| | $HSCH_2CH_2O\overset{O}{\overset{\|}{C}}CH_2SH$ | 0.125 |
| | Organotin cmpd. No. 7i from Table Va | 0.10 |
| 26 | Hydroxythio tin cmpd. K from Table II | 0.05 |
| | 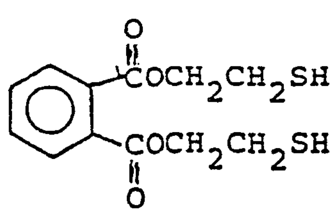 | 0.15 |
| | Organotin cmpd. No. 7b from Table Va | 0.35 |

CLAIMS

1. A composition for stabilizing halogen-containing polymers against the deteriorative effects of heat characterised in that it comprises:

(A) a hydroxythio tin compound or mixture of hydroxythio tin compounds selected from compounds having the general formulae:

(I) 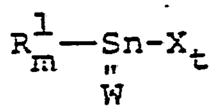 ,

(II) 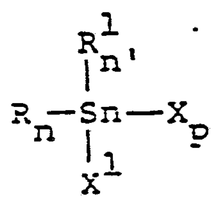 ,

(III) 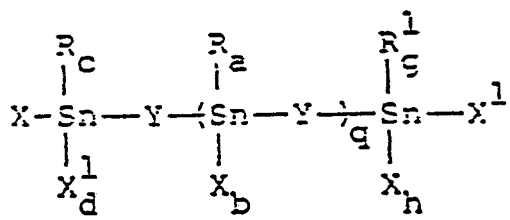 , and

(IV) 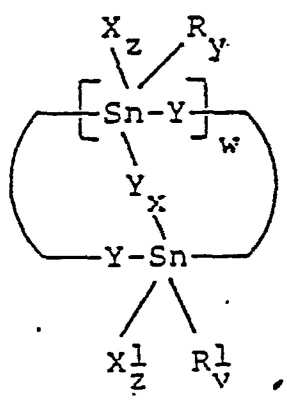 , wherein

BAD ORIGINAL

X and $X^1$ are the same or different and are selected from

$-SR^2$, Cl, Br, I, $-O-\overset{O}{\overset{\|}{C}}-R^8$, and $O-R^8$;

Y is $-(S)_v-$, $-W-R^3-W^1-$, $-S-R^4-\overset{O}{\overset{\|}{C}}-O$, $S-R^4-\overset{O}{\overset{\|}{C}}-O-R^5-O-\overset{O}{\overset{\|}{C}}-R^4-S-$,

$-S-R^3-O-\overset{O}{\overset{\|}{C}}-R^4-S-$, $-S-R^3-O-\overset{O}{\overset{\|}{C}}-R^6-\overset{O}{\overset{\|}{C}}-O-R^3-S-$, $-O-\overset{O}{\overset{\|}{C}}-R^6-\overset{O}{\overset{\|}{C}}-O-$,

$-O-\overset{O}{\overset{\|}{C}}-R^6-\overset{O}{\overset{\|}{C}}-O-R^5-O-\overset{O}{\overset{\|}{C}}-R^6-\overset{O}{\overset{\|}{C}}-O$, or $-S-\underset{R^{24}}{\underset{|}{CH}}-(\underset{R^{24}}{\underset{|}{CH}})_i-O-\overset{O}{\overset{\|}{C}}-(\underset{R^{24}}{\underset{|}{CH}})_i$ ;

W and $W^1$ are the same or different and are oxygen or sulfur;

R and $R^1$ are the same or different and are selected from alkyl, aryl, alkenyl, aralkyl, alkaryl, cycloalkyl, cycloalkenyl,

$-R^9-\overset{O}{\overset{\|}{C}}-R^8$, $-R^9-\overset{O}{\overset{\|}{C}}-O-R^{12}$, $-R^9-O-\overset{O}{\overset{\|}{C}}-R^8$, $-\underset{\underset{R^{21}}{\underset{|}{O=C}}}{\underset{|}{CH}}-\overset{O}{\overset{\|}{C}}-R^{13}$,

$-R^9-O-R^{12}$, $-R^9-CN$;

$R^2$ is alkyl, alkenyl, aryl, hydroxy-substituted aryl, aralkyl, cycloalkyl, cycloalkenyl, $-R^4-\overset{O}{\overset{\|}{C}}-O-R^7$, $-R^3-O-\overset{O}{\overset{\|}{C}}-R^8$,

$-R^4-O-\overset{O}{\overset{\|}{C}}-R^4-\overset{O}{\overset{\|}{C}}-O-R^8$, $-R^4-\overset{O}{\overset{\|}{C}}-O-R^3-O-\overset{O}{\overset{\|}{C}}-R^8$, $-R^3-S-R^7$,

$-R^3-O-R^8$ or $-R^3OH$;

$R^3$ is alkylene of at least 2 carbon atoms, arylene, alkenylene of at least 2 carbon atoms, cycloalkylene, or cycloalkenylene;

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^7$ is -H or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is -H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy;

$R^{24}$ is $-\overset{O}{\overset{\|}{C}}-O-R^{16}$, $-O-\overset{O}{\overset{\|}{C}}-R^{16}$, -OH, -SH, aryl, $C_1$ to $C_{18}$ alkyl or -H;

$R^{16}$ is -H or $R^8$;

i = 0 or an integer from 1 to 6 inclusive;

m = 0 or 1, t = 1 or 2 with the proviso that m + t = 2;

n = 0, 1, 2 or 3, n' = 0, 1, 2 or 3, p = 0, 1, 2 or 3 with the proviso that n + n' + p = 3;

a = 0,1 or 2, b = 0,1 or 2, c = 0, 1 or 2, d = 0, 1 or 2, g = 0, 1 or 2, h = 0, 1 or 2 and q = 0 or an integer from 1 to 4 inclusive with the proviso that a + b = 2, c + d = 2 and g + h = 2;

v = an integer from 1 to 8 inclusive; and

w = 0, 1 or 2, x = 0 or 1, y = 0 or 1 and z = 1 or 2 with the proviso that when x = 0 then y + z = 2, when x = 1 then y + z = 1 and w = 1, when w = 2 then x = 0, and when w = 0 then x = 0, y + z = 2 and Y is $-W-R^3-W^1-$ or

$-S-R^4-\overset{O}{\overset{\|}{C}}-O-$;

with the proviso that at least one X or $X^1$ in each of formulae (I)-(IV) is $-SR^2$ where $R^2$ is $-R^3OH$; and

B. a mercaptan-containing organic compound or mixture of mercaptan-containing organic compounds selected from compounds having the general formulae:

(V) 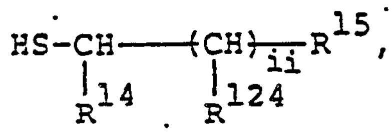

(Va) $HSCH_2\overset{O}{\overset{\|}{C}}OH$,

(VI) 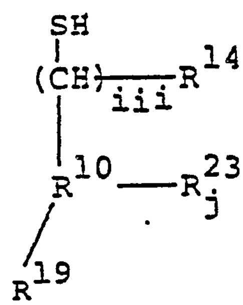

(VII) 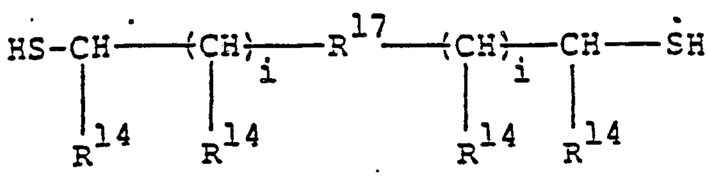 ,

(VIIa) 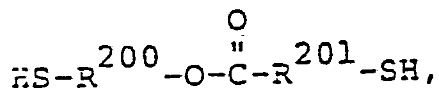

(VIII) 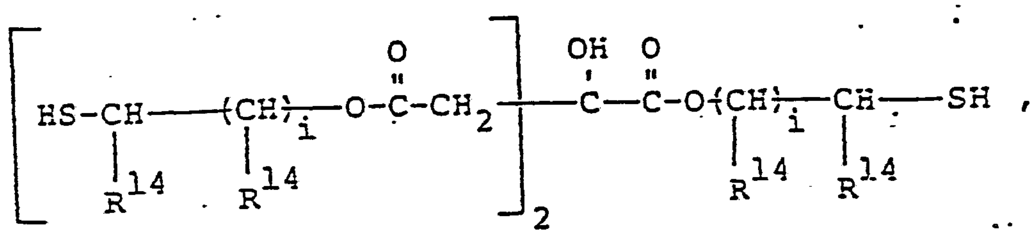

(IX) 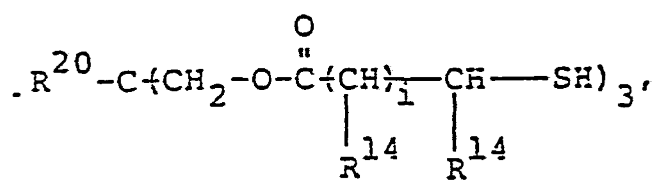 and

(X) 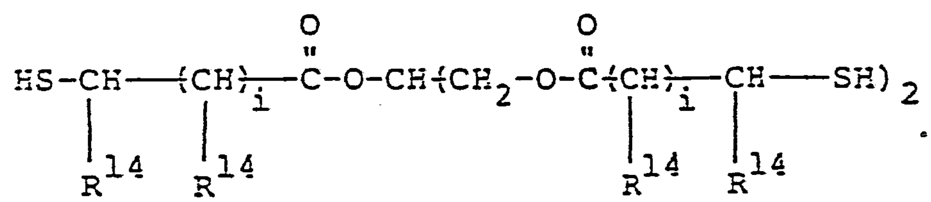 where

$R^{14}$ is -H, aryl or $C_1$ to $C_{18}$ alkyl;

i is as previously defined;

$R^{10}$ is cycloalkyl, cycloalkenyl or phenyl;

$R^{15}$ is $-\overset{O}{\overset{\|}{C}}-O-R^{116}$, $-O-\overset{O}{\overset{\|}{C}}-R^{116}$, -OH, -SH, aryl, $C_1$ to $C_{18}$ alkyl, or -H;

$R^{116}$ is -H or $-R^8$;

$R^{17}$ is $-O-\overset{O}{\overset{\|}{C}}-R^{18}-\overset{O}{\overset{\|}{C}}-O-$ or $O-\overset{O}{\overset{\|}{C}}-CH=CH-\overset{O}{\overset{\|}{C}}-O-$;

$R^{18}$ is arylene, $C_1$ to $C_8$ alkylene, or $-\underset{R^{14}}{\underset{|}{CH}}-(\underset{R^{14}}{\underset{|}{CH}})_i-(S)_f-(\underset{R^{14}}{\underset{|}{CH}})_i-\underset{R^{14}}{\underset{|}{CH}}-$;

$R^{19}$ is -H or a divalent group which may contain halogen, hydroxy, mercapto or alkyl substituents and which combines with $R^{10}$ when $R^{10}$ is phenyl to form a naphthalene ring;

$R^{20}$ is $-CH_3$, $-CH_2CH_3$, or $-CH_2-O-\overset{O}{\overset{\|}{C}}-(\underset{R^{14}}{\underset{|}{CH}})_i-\underset{R^{14}}{\underset{|}{CH}}-SH$;

$R^{23}$ is $-\overset{O}{\overset{\|}{C}}-O-R^{116}$, $-O-\overset{O}{\overset{\|}{C}}-R^{116}$, -SH, aryl, $C_1$ to $C_{18}$ alkyl, -OH or H

$R^{124}$ is $-\overset{O}{\overset{\|}{C}}-O-R^{116}$, $-O-\overset{O}{\overset{\|}{C}}-R^{116}$, -OH, -SH, aryl, $C_1$ to $C_{18}$ alkyl or -H;

$R^{200}$ and $R^{201}$ are the same or different and are alkylene, alkenylene, arylene, cycloalkylene or cycloalkenylene; or alkylene, alkenylene, arylene, cycloalkylene or cycloalkenylene each substituted with one or two -R, $-O-R^7$, $-R^9-O-R^7$, $-O-\overset{O}{C}-R^8$ or $-O-\overset{O}{C}-R^4-\overset{O}{C}-O-R^8$ groups; R, $R^7$, $R^8$, $R^4$ and $R^9$ are as previously defined;

ii = 0 or an integer from 1 to 6 inclusive, with the proviso that when $R^{15}$ is $-\overset{O}{C}-O-R^{116}$ where $R^{116}$ is -H, then ii = an integer from 1 to 6 inclusive;

iii = 0 or an integer from 1 to 6 inclusive, with the proviso that when $R^{23}$ is $-\overset{O}{C}-O-R^{116}$ where $R^{116}$ is -H, and $R^{23}$ is bonded to the same ring carbon atom as the $-(\underset{R^{14}}{\underset{|}{CH}})_{iii}-SH$ group, then iii = an integer from 1 to 6 inclusive.

j = 0, 1, 2 or 3; and

f = 1 or 2,

with or without an

organotin compound or mixture of organotin compounds selected from compounds having the general formulae:

(XI) 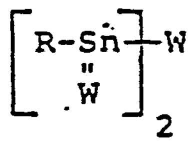 ,

(XII) 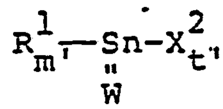 ,

(XIIa) 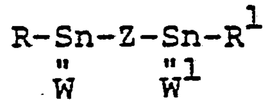

(XIII) 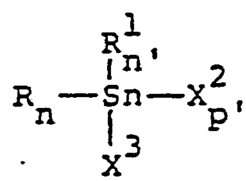

(XIV) 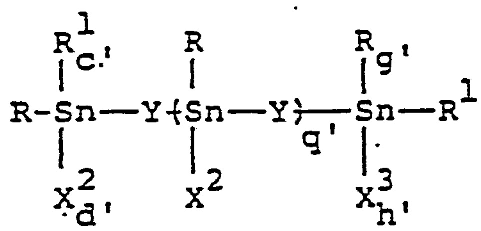 and

(XV) 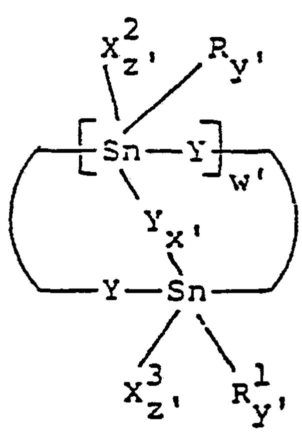 wherein

R, W, $R^1$, and Y are as previously defined;

$X^2$ and $X^3$ are the same or different and are selected from

$-SR^{25}$, Cl, Br, I, $-O-\overset{\overset{O}{\|}}{C}-R^8$ and $-O-R^8$ with the proviso that in formula (XV) where z' = 1 and in formulas (XIII) and (XIV) at least one $X^2$ or $X^3$ is $-SR^{25}$;

$R^{25}$ is alkyl, alkenyl, aryl, aralkyl,

cycloalkyl, cycloalkenyl, $-R^4-\overset{\overset{O}{\|}}{C}-O-R^7$, $-R^3-O-\overset{\overset{O}{\|}}{C}-R^8$, $-R^4-O-\overset{\overset{O}{\|}}{C}-R^4-\overset{\overset{O}{\|}}{C}-O-R^8$, $-R^4-\overset{\overset{O}{\|}}{C}-O-R^3-O-\overset{\overset{O}{\|}}{C}-R^8$, $-R^3-S-R^7$ or $-R^3-O-R^8$;

Z is $-S-R^4-\overset{\overset{O}{\|}}{C}-O-R^5-O-\overset{\overset{O}{\|}}{C}-R^4-S-$, $-S-R^3-O-\overset{\overset{O}{\|}}{C}-R^4-S-$, $-S-R^3-O-\overset{\overset{O}{\|}}{C}-R^6-\overset{\overset{O}{\|}}{C}-O-R^3-S-$;

$R^3$, $R^4$, $R^5$, $R^6$, $R^7$ and $R^8$ are as previously defined;

m' = 1 or 2, t' = 0 or 1 with the proviso that m' + t' = 2;

n and n' are as previously defined, p' = 0, 1 or 2 with the proviso that n + n' = 1, 2 or 3 and n + n' + p' = 3;

c' = 0 or 1, d' = 1 or 2, e' is 0 or an integer from 1 to 4 inclusive, g' = 0 or 1 and h' = 1 or 2 with the proviso that c' + d' = 2 and g' + h' = 2; and

w' = 0, 1 or 2, x' = 0 or 1, y' = 1 or 2 and z' = 0 or 1 with the proviso that when x' = 0 then y' + z' = 2, when x' = 1 then y' = 1, z' = 0 and w' = 1, when w' = 2 then x' = 0, and when w' = 0 then x' = 0, y' + z' = 2

and Y is $-W-R^3-W^1-$ or $-S-R^4-\overset{\overset{O}{\|}}{C}-O-$.

2. A composition as claimed in claim 1 further characterised in that in formula (I) $R^1$ is methyl, butyl or octyl, W is sulfur, X is $-SR^2$ where $R^2$ is $-R^3OH$, $m = 1$ and $t = 1$.

3. A composition as claimed in claim 1 further characterised in that in formula (II) R is methyl or butyl, X is $-SR^2$ where $R^2$ is $-R^3OH$, $X^1$ is $-SR^2$ where $R^2$ is $-R^3OH$, $n = 1$, $n' = 0$ and $p = 2$.

4. A composition as claimed in claim 1 further characterised in that in formula (III) R is methyl or butyl, X is $-SR^2$ where $R^2$ is $-R^3OH$, $R^1$ is methyl or butyl, $X^1$ is $-SR^2$ where $R^2$ is $-R^3OH$, Y is -S-, $c = 0$ or 1, $d = 1$ or 2, $q = 0$, $g = 1$ and $h = 1$.

5. A composition as claimed in claim 1 further characterised in that in formula (IV) R is methyl or butyl, $R^1$ is methyl or butyl, X is $-SR^2$ where $R^2$ is $-R^3OH$, $X^1$ is $-SR^2$ where $R^2$ is $-R^3OH$, Y is -S-, $w = 1$, $x = 0$, $y = 1$ and $z = 1$.

6. A composition as claimed in claim 1 further characterised in that in formula (V) $R^{14}$ is -H, $R^{124}$ is -H, $R^{15}$ is $-O\overset{O}{\overset{\|}{C}}R^{116}$ and $ii = 1$.

7. A composition as claimed in claim 1 further characterised in that in formula (VI) $R^{10}$ is phenyl, $R^{14}$ is -H, $R^{23}$ is -H, $R^{19}$ is -H, $iii = 1$ and $j = 1$.

8. A composition as claimed in claim 1 further characterised in that in formula (VII) $R^{14}$ is -H, $R^{17}$ is $-O\overset{O}{\overset{\|}{C}}CH-CH\overset{O}{\overset{\|}{C}}O-$ and $i = 1$.

9. A composition as claimed in claim 1 further characterised in that in formula (VIIa) $R^{200}$ is $-CH_2CH_2-$ or $-CH_2\underset{C_9H_{19}}{\underset{|}{C}}H-$ and $R^{201}$ is $-CH_2-$ or $-\underset{OH}{\underset{|}{C}}H-$ .

10. A composition as claimed in claim 1 further characterised in that in formula (VIII) $R^{14}$ is -H and $i = 1$.

11. A composition as claimed in claim 1 further characterised in that in formula (IX) $R^{20}$ is $-C_2H_5$ or

$$-CH_2O\overset{O}{\overset{\|}{C}}-(\underset{R^{14}}{\underset{|}{CH}})_i-\underset{R^{14}}{\underset{|}{C}}HSH$$

, $R^{14}$ is -H and i = 1.

12. A composition as claimed in claim 1 further characterised in that in formula (X) $R^{14}$ is -H and i = 1.

13. A composition as claimed in any of claims 1 to 12 further characterised in that in formula (XI) R is methyl, butyl or octyl and W is sulfur.

14. A composition as claimed in any of claims 1 to 12 further characterised in that in formula (XII) $R^1$ is methyl or butyl, W is sulfur, $X^2$ is $-SR^{25}$ where $R^{25}$ is $-R^3O\overset{O}{\overset{\|}{C}}R^8$, m' = 1 and t' = 1.

15. A composition as claimed in any of claims 1 to 12 further characterised in that in formula (XIIa) R and $R^1$ are methyl, butyl, octyl or $-R^9-\overset{O}{\overset{\|}{C}}-O-R^{12}$; W and $W^1$ are oxygen or sulfur; and Z is

$$-S-R^3-O-\overset{O}{\overset{\|}{C}}-R^6-\overset{O}{\overset{\|}{C}}-O-R^3-S-.\ -S-R^3-O-\overset{O}{\overset{\|}{C}}-R^4-S-\text{ or}$$

$$-S-R^4-\overset{O}{\overset{\|}{C}}-O-R^5-O-\overset{O}{\overset{\|}{C}}-R^4-S-.$$

16. A composition as claimed in any of claims 1 to 12 further characterised in that in formula (XIII) R is methyl or butyl, $X^2$ is $-SR^{25}$ where $R^{25}$ is $-R^3-O\overset{O}{\overset{\|}{C}}R^8$, $X^3$ is $-SR^{25}$ where $R^{25}$ is $-R^3O\overset{O}{\overset{\|}{C}}R^8$, n = 1, n' = 0 and p' = 2.

17. A composition as claimed in any of claims 1 to 12 further characterised in that in formula (XIV) R is methyl, $X^2$ is $=SR^{25}$ where $R^{25}$ is $-R^3O\overset{O}{\overset{\|}{C}}R^8$, $R^1$ is methyl, $X^3$ is $-SR^{25}$

where $R^{25}$ is $OR^3O\overset{O}{\overset{\|}{C}}R^8$, Y is -S-, c' = 0, d' = 2, q' = 0, g' = 0 and h' = 2.

18. A composition as claimed in any of claims 1 to 12 further characterised in that in formula (XV) R is methyl, $R^1$ is methyl, Y is -S-, w' = 1, x ' = 1, y' = 1 and z' = 0.

19. A polymer composition stabilized against the deteriorative effects of heat comprising a halogen-containing organic polymer and characterised in that it contains a stabilizingly effective amount of the composition claimed in any one of claims 1 to 18.

20. A process for stabilizing a halogen-containing organic polymer against the deteriorative effects of heat characterised in that it comprises admixing said polymer with a stabilizingly effective amount of the composition claimed in any one of claims 1 to 18.

21. A shaped article of manufacture such as a pipe comprising a halogen-containing organic polymer and characterised in that it contains a stabilizingly effective amount of the composition claimed in any of claims 1 to 18.

0082582

European Patent Office

# EUROPEAN SEARCH REPORT

Application number

EP 82 30 0977

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-4 043 957 (E.SZABO) *Claims* ----- | 1-21 | C 08 K 5/00<br>C 08 L 101/04<br>C 08 L 27/06 |
| | | | **TECHNICAL FIELDS SEARCHED (Int. Cl. 3)** |
| | | | C 08 K<br>C 08 L |

The present search report has been drawn up for all claims

| Place of search | Date of completion of the search | Examiner |
|---|---|---|
| THE HAGUE | 02-07-1982 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document